# EUROPÄISCHE PATENTSCHRIFT

(11) **EP 3 578 960 B1**
(45) Veröffentlichungstag und Bekanntmachung des Hinweises auf die Patenterteilung: **14.06.2023**
(21) Anmeldenummer: 19176938.9
(22) Anmeldetag: 28.05.2019
(51) Int. Cl.: G01N 25/48

(54) **MESSANORDNUNG UND VERFAHREN FÜR EINE THERMISCHE ANALYSE EINER PROBE**
MEASURING ASSEMBLY AND METHOD FOR THERMAL ANALYSIS OF A SAMPLE
DISPOSITIF DE MESURE ET PROCÉDÉ D'ANALYSE THERMIQUE D'UN ÉCHANTILLON

(30) Priorität: 06.06.2018 DE 102018113417
(43) Veröffentlichungstag der Anmeldung: 11.12.2019
(73) Patentinhaber: Netzsch-Gerätebau GmbH, 95100 Selb (DE)
(72) Erfinder: Schindler, Alexander, Dr., 95191 Leupoldsgrün (DE)

(56) Entgegenhaltungen:
- EP-A1- 0 990 893
- EP-A1- 1 528 392
- WO-A1-2008/121938
- DE-A1- 3 136 536
- GB-A- 1 324 982
- Belinda Gruber: "Ermittlung der spezifischen Wärmekapazität mittels HT-DSC von höher legierten Stählen", , 1. April 2016 (2016-04-01), XP055645465, Gefunden im Internet: URL:https://pure.unileoben.ac.at/portal/fi les/1865601/AC13096593n01vt.pdf [gefunden am 2019-11-22]

## Beschreibung

Die vorliegende Erfindung betrifft eine Messanordnung für eine thermische Analyse nach dem Oberbegriff des Anspruchs 1, sowie ein Verfahren zur thermischen Analyse nach dem Oberbegriff des Anspruchs 9.

Derartige Messanordnungen und damit realisierte Verfahren zur thermischen Analyse einer Probe sind in vielfältigen Ausführungen aus dem Stand der Technik bekannt.

Den hier interessierenden Verfahren ist gemein, dass wenigstens eine in einer Probenkammer angeordnete Probe gemäß eines Temperaturprogramms temperiert wird, in dessen Verlauf eine Kammertemperatur im Inneren der Probenkammer verändert wird, wobei im Verlauf des Temperaturprogramms mittels eines der jeweiligen Probe zugeordneten Sensors zumindest eine Probentemperatur der Probe gemessen wird.

Die bei einem derartigen Verfahren zum Anordnen der Probe und zum Messen der Probentemperatur einsetzbare und hierfür in der Probenkammer anzuordnende Messanordnung weist einen Tiegel zur Lagerung einer Probe in dem Tiegel und einen Sensor zur Messung einer Probentemperatur der Probe bei auf dem Sensor angeordnetem Tiegel auf.

Bei vielen Verfahren der thermischen Analyse werden in der betreffenden Probenkammer zwei derartige Messanordnungen benötigt, beispielsweise um bei dem Verfahren gleichzeitig die "eigentliche (zu analysierende) Probe" als auch eine weitere Probe, üblicherweise als "Referenz" oder "Referenzprobe" bezeichnet, gemäß des Temperaturprogramms in derselben Probenkammer zu temperieren.

Alternativ zu einer derartigen Anordnung einer Referenzprobe im Tiegel der zweiten Messanordnung kommt auch in Betracht, bei einem derartigen Verfahren den Tiegel der zweiten Messanordnung "leer" (d. h. ohne eine darin befindliche Probe bzw. Referenzprobe) zu betreiben.

Beispiele für derartige zwei Messanordnungen der genannten Art involvierende Verfahren zur thermischen Analyse sind z. B. die Differentialthermoanalyse (DTA) sowie z. B. die daraus abgeleitete Methode der so genannten Differential Scanning Calorimetry (DSC). Die bzw. jede Messanordnung kann außer dem erwähnten Sensor zur Messung der Probentemperatur noch weitere Mittel zur Messung einer oder mehrerer physikalischer Grö-ßen im Verlauf des Temperaturprogramms aufweisen. Entsprechende Methoden werden oftmals unter dem Begriff Simultane Thermische Analyse (STA) zusammengefasst. Ein Beispiel hierfür ist die Ermittlung der temperaturabhängigen kalorischen Effekte einer Probe mittels DSC mit simultaner Ermittlung der temperaturabhängigen Masse der Probe mittels Thermogravimetrie (TG).

Bei vielen bekannten Messanordnungen und damit realisierten Verfahren zur thermischen Analyse gibt es bei der Messanordnung in lateraler Richtung betrachtet keine definiert vorgegebene Anordnungsposition des Tiegels auf dem Sensor. Vielmehr kann ein Benutzer vor der Durchführung einer thermischen Analyse den Tiegel in gewissen Grenzen an beliebiger Stelle auf dem Sensor anordnen. In vielen Anwendungsfällen ergibt es sich dann, dass bei wiederholtem Entfernen und wieder neu Anordnen des Tiegels auf dem Sensor, etwa bei Durchführung von Messreihen, die Reproduzierbarkeit entsprechender Messvorgänge der thermischen Analyse beeinträchtigt ist.

Um die Reproduzierbarkeit der im Rahmen der thermischen Analyse durchgeführten Messungen zu erhöhen, wurde gemäß eines internen Stands der Technik der Anmelderin bei einer Messanordnung der eingangs genannten Art bereits eine "Zentrierung" eines Tiegels auf dem Sensor realisiert, indem eine Oberseite des Sensors mit einem nach oben vorstehenden Sensorrand ausgebildet wurde, derart, dass der Tiegel damit durch Formschluss in seiner Anordnung auf dem Sensor zentriert wird (Tiegel von kreisrunder Kontur in einem dazu passenden, vom Sensorrand definierten Aufnahmeraum). Gemäß dieser verbesserten Ausführung ist somit die Stelle, an der ein Benutzer den Tiegel auf dem Sensor anordnen kann, vorteilhaft fest vorgegeben.

Es hat sich jedoch in der Praxis herausgestellt, dass auch mit einer derart verbesserten Ausführung der Messanordnung die Reproduzierbarkeit in manchen Anwendungsfällen, etwa bei mit hohen Anforderungen an die Messgenauigkeit durchzuführenden Messreihen, nicht immer zufriedenstellend ist.

Es ist eine Aufgabe der vorliegenden Erfindung, bei einer Messanordnung und einem damit durchgeführten Verfahren zur thermischen Analyse der eingangs genannten Art ein hohes Maß an Reproduzierbarkeit von Messungen zu ermöglichen.

Gemäß eines ersten Aspekts der Erfindung ist zur Lösung dieser Aufgabe die Messanordnung durch einen Verdrehschutz für den Tiegel gekennzeichnet, um bei auf dem Sensor angeordnetem Tiegel eine vorbestimmte Drehstellung des Tiegels bezüglich des Sensors vorzusehen.

Mit der Erfindung kann in einfacher Weise insbesondere z. B. auch bei rotationssymmetrisch formgestalteten Tiegeln vorteilhaft eine verbesserte Reproduzierbarkeit erzielt werden. Dafür verantwortlich sind bei rotationssymmetrisch formgestalteten Tiegeln offenbar durch Fertigungstoleranzen bedingte Abweichungen von der Rotationssymmetrie, welche die Reproduzierbarkeit von Messungen beeinträchtigen, solange der Tiegel wie im Stand der Technik von einem Benutzer in beliebiger bzw. zufälliger Drehstellung bezüglich des Sensors angeordnet werden kann. In besonders bevorzugter Ausführungsform ist der erfindungsgemäße Verdrehschutz für den Tiegel in Kombination mit einer Zentrierung des Tiegels bezüglich des Sensors vorgesehen.

Ein "Tiegel" im Sinne der Erfindung besteht aus oder umfasst einen Basiskörper, nachfolgend auch als Tiegelkorpus bezeichnet, der zumindest annähernd die Form einer Schale oder eines Topfes besitzt. Im Hinblick auf die Verwendungssituation, bei welcher der Tiegel auf dem Sensor angeordnet wird, weist der Tiegelkorpus einen nachfolgend als "Boden" bezeichneten Abschnitt auf, der einen (in Verwendungssituation) dem Sensor zugewandten unteren Endabschnitt des Tiegelkorpus darstellt, sowie einen nachfolgend als "Mantel" bezeichneten Abschnitt, der eine seitliche Begrenzung des Tiegelkorpus darstellt und sich ausgehend vom Boden in Richtung vom Sensor weg (nach oben) erstreckt. Der Boden und der Mantel des Tiegels begrenzen einen Innenraum des Tiegels, in welchem sich auf dem Boden gelagert ggf. die Probe befindet. Der Tiegel kann (optional) mit einer Abdeckung versehen sein, welche eine ansonsten am oberen Ende des Mantels befindliche Öffnung des Tiegels verschließt (ganz oder teilweise). Eine derartige Abdeckung kann z. B. als separates Teil ausgebildet und an einem oberen Rand des Mantels (lösbar oder unlösbar) angebracht sein. Im Rahmen der Erfindung können z. B. insbesondere Tiegel verwendet werden, deren Tiegelkorpus eine zumindest annähernd zylindrische oder kegelstumpfförmige Gestalt besitzt. Der Tiegel kann z. B. eine maximale laterale Ausdehnung im Bereich von 3 bis 15 mm und/oder eine Höhe im Bereich von 2 bis 10 mm besitzen, bevorzugt in einem Lateralausdehnung/Höhe-Verhältnis im Bereich von 1,0 bis 1,5. Eine Wandstärke des Tiegelkorpus kann z. B. im Bereich von 50 bis 300 µm liegen.

Im Rahmen der Erfindung kann vorgesehen sein, dass die Messanordnung ferner einen "Außentiegel" zur Lagerung des Tiegels in dem Außentiegel aufweist, wobei der Tiegel aus einem Tiegelmaterial und der Außentiegel aus einem von dem Tiegelmaterial verschiedenen Außentiegelmaterial gebildet ist.

Ein "Außentiegel" im Sinne dieser Weiterbildung der Erfindung besteht aus oder umfasst einen Basiskörper, nachfolgend auch "Außentiegelkorpus" genannt, der zumindest annähernd die Form einer Schale oder eines Topfes besitzt, wobei im Hinblick auf den Verwendungszweck (Lagerung des Tiegels) der Außentiegelkorpus zumindest einen als (Außentiegel-)"Mantel" zu bezeichnenden Abschnitt aufweist, der eine seitliche Begrenzung des Außentiegelkorpus darstellt, sowie optional einen als (Außentiegel-)"Boden" zu bezeichnenden Abschnitt aufweisen kann, der einen (in Verwendungssituation) dem Sensor zugewandten unteren Endabschnitt des Außentiegelkorpus darstellt und an der Unterseite des Mantels angebunden ist. Ein auf der Innenseite des Mantels von dem Mantel (und dem ggf. vorhandenen Boden) begrenzter Innenraum des Außentiegels ist hierbei so zu bemessen, dass der Tiegel der Messanordnung darin gelagert werden kann.

In einer bevorzugten Ausführungsform des Außentiegels besitzt dieser in Draufsicht betrachtet eine kreisrunde Kontur. Im Rahmen der Erfindung können z. B. insbesondere Au-ßentiegel verwendet werden, deren Außentiegelkorpus eine zumindest annähernd zylindrische oder kegelstumpfförmige Gestalt besitzt. Der Außentiegel kann z. B. eine maximale laterale Ausdehnung im Bereich von 3 bis 15 mm und/oder eine Höhe im Bereich von 2 bis 5 mm besitzen, bevorzugt in einem Lateralausdehnung/Höhe-Verhältnis im Bereich von 1 bis 10. Eine Wandstärke eines Außentiegelmantels und/oder eine Wandstärke eines Außentiegelbodens kann insbesondere z. B. in einem Bereich von 50 bis 250 µm liegen.

Die Verwendung eines Außentiegels ermöglicht es vorteilhaft, einen direkten Kontakt zwischen dem Tiegel und dem Sensor zu vermeiden, so dass eine Reaktion zwischen Tiegel- und Sensormaterial vermieden ist. Insbesondere wenn im Verlauf des Temperaturprogramms der thermischen Analyse relativ hohe Temperaturen im Inneren der Probenkammer bzw. daraus resultierende relativ hohe Probentemperaturen auftreten, kann es ansonsten nämlich zu unerwünschten chemischen Reaktionen und/oder physikalischen Reaktionen (z. B. Diffusions- oder Verschweissungsvorgänge) zwischen Probenmaterial und Tiegelmaterial, sowie zwischen Tiegel- und Sensormaterial kommen. Der den Tiegel lagernde Außentiegel kann aus einem Material ausgebildet sein, welches sowohl besonders gut kompatibel zum betreffenden Tiegelmaterial als auch besonders gut kompatibel zum betreffenden Sensormaterial ist. Zweckmäßigerweise sind der Tiegel und der Außentiegel so ausgebildet und der Tiegel so im Außentiegel gelagert, dass in Verwendungssituation der Tiegel nur eine Innenseite des Außentiegels kontaktiert und der Sensor nur eine Außenseite des Außentiegels kontaktiert.

Der "Sensor" umfasst im Hinblick auf die Verwendungssituation eine Oberseite, überhalb derer der Tiegel gelagert werden kann. Diese Oberseite kann, wie nachfolgend noch erläutert, eben oder uneben ausgebildet sein und insbesondere z. B. zumindest an der Oberfläche aus einem metallischen Material gebildet sein. Um mit dem Sensor die Probentemperatur einer im Tiegel befindlichen Probe messen zu können, kann der Sensor z. B. unterhalb der erwähnten Oberfläche insbesondere z. B. ein Thermoelement oder andere zur Temperaturmessung geeignete Mittel aufweisen. In einer speziellen Ausführungsform besteht der Sensor aus wenigstens zwei verschiedenen Materialien, insbesondere metallischen Materialien, die derart angeordnet sind, dass damit bereits ein Thermoelement für die Messung der Probentemperatur ausgebildet ist. Im Rahmen der Erfindung kann z. B. insbesondere ein Sensor verwendet werden, der eine zumindest annähernd kreisscheibenförmige Gestalt besitzt. Der Sensor kann z. B. eine maximale laterale Ausdehnung im Bereich des 1,0-fachen bis 1,5-fachen der maximalen lateralen Ausdehnung des Tiegels besitzen.

In einer Ausführungsform der Erfindung ist vorgesehen, dass der Tiegel im Bereich seiner Außenseite eine für einen Benutzer sichtbare Markierung aufweist, um dem Benutzer ein Anordnen des Tiegels auf dem Sensor in der vorbestimmten Drehstellung des Tiegels bezüglich des Sensors anhand der Markierung zu ermöglichen.

Diese Ausführungsform gestattet es dem Benutzer, den Tiegel stets in derselben Drehstellung bezüglich des Sensors auf dem Sensor anzuordnen, indem der Tiegel hierbei so gedreht wird, dass die genannte Markierung sich in der vorbestimmten Position (Drehstellung) befindet.

Darüber hinaus kann vorteilhaft auch im Bereich des Sensors oder an einer stationär zum Sensor angeordneten Komponente der Messanordnung eine sichtbare Markierung vorgesehen sein, etwa um beim Anordnen des Tiegels auf dem Sensor die beiden Markierungen drehwinkelmäßig "zur Deckung bringen" zu können.

In einer Weiterbildung dieser Ausführungsform ist vorgesehen, dass die Markierung als ein Markierungsvorsprung oder als eine Markierungsvertiefung ausgebildet ist, wobei der Markierungsvorsprung bzw. die Markierungsvertiefung bevorzugt eine in Vertikalrichtung des Tiegels langgestreckte Formgestaltung besitzt und/oder eine in einer Umfangsrichtung des Tiegels betrachtete Breite im Bereich von 0,1 mm bis 1,0 mm besitzt.

Falls zusätzlich auch im Bereich des Sensors oder an einer stationär zum Sensor angeordneten Komponente der Messanordnung eine sichtbare Markierung vorgesehen ist, so kann auch diese als ein Markierungsvorsprung oder als eine Markierungsvertiefung ausgebildet sein, bevorzugt mit einer in Vertikalrichtung der Messanordnung langgestreckten Formgestaltung und/oder einer in einer Umfangsrichtung des Sensors betrachteten Breite im Bereich von 0,1 mm bis 1,0 mm.

Erfindungsgemäß ist vorgesehen, dass bei auf dem Sensor angeordnetem Tiegel die vorbestimmte Drehstellung des Tiegels bezüglich des Sensors durch einen formschlüssigen Eingriff eines Vorsprunges in eine Vertiefung gewährleistet wird, wobei der Vorsprung am Sensor oder einer stationär zum Sensor angeordneten weiteren Komponente der Messanordnung und die Vertiefung im Bereich der Außenseite des Tiegels, oder umgekehrt, angeordnet sind.

In einer ersten Variante dieser Ausführungsform ist vorgesehen, dass die im Bereich der Außenseite des Tiegels angeordnete Vertiefung bzw. der im Bereich der Außenseite des Tiegels angeordnete Vorsprung direkt an der Außenseite eines Mantels des Tiegels angeordnet ist.

In einer zweiten Variante dieser Ausführungsform weist die Messanordnung ferner eine den Tiegel zumindest im Bereich eines Mantels des Tiegels umgebende Komponente auf, insbesondere einen den Tiegel lagernden Außentiegel, wobei die im Bereich der Außenseite des Tiegels angeordnete Vertiefung bzw. der im Bereich der Außenseite des Tiegels angeordnete Vorsprung an der Außenseite dieser den Tiegel umgebenden Komponente, insbesondere Außentiegel, angeordnet ist. Anstatt von einem Außentiegels kann eine solche weitere Komponente z. B. auch von einer am Außenumfang des Tiegels angeordneten "Manschette" oder ähnlichem gebildet sein.

In einer Weiterbildung der einen formschlüssigen Eingriff eines Vorsprunges in eine Vertiefung vorsehenden Ausführungsform ist vorgesehen, dass die Vertiefung und/oder der Vorsprung in einer Ebene orthogonal zur Richtung des Eingriffs betrachtet eine runde Querschnittsfläche besitzt. Die Querschnittsfläche kann z. B. eine wenigstens annähernd kreisrunde Querschnittsfläche darstellen, wofür die Vertiefung und der Vorsprung z. B. jeweils wenigstens annähernd kegelstumpfförmig oder annähernd halbkugelförmig formgestaltet sein können. Eine Querabmessung (z. B. Durchmesser) der runden Querschnittsfläche kann z. B. im Bereich von 1 bis 3 mm liegen.

In einer anderen Weiterbildung der einen formschlüssigen Eingriff eines Vorsprunges in eine Vertiefung vorsehenden Ausführungsform ist vorgesehen, dass die Vertiefung und/oder der Vorsprung in einer Ebene orthogonal zur Richtung des Eingriffs betrachtet eine langgestreckte Querschnittsfläche besitzt.

Die langgestreckte Querschnittsfläche kann z. B. wenigstens annähernd in Vertikalrichtung verlaufen (z. B. mit einer Länge im Bereich von 1 bis 5 mm) und/oder eine in einer Umfangsrichtung des Tiegels betrachtete Breite im Bereich von 0,5 mm bis 3,0 mm besitzen. Die Vertiefung kann z. B. eine geradlinig verlaufende Nut bilden, in die eine passend bemessene geradlinig verlaufende Rippe eingreift. Ein geradliniger Verlauf der vorgenannten langgestreckten Querschnittsfläche der Vertiefung und korrespondierend hierzu des Vorsprungs ist bevorzugt in Vertikalrichtung der Messanordnung orientiert. Ferner ist es bevorzugt, wenn die Vertiefung und korrespondierend hierzu der Vorsprung einen abgerundeten Vertiefungsboden bzw. ein abgerundetes Vorsprungsende aufweisen. Alternativ oder zusätzlich kann z. B. vorgesehen sein, dass ein Querschnitt der Vertiefung und korrespondierend hierzu ein Querschnitt des Vorsprungs sich in Eingriffsrichtung betrachtet verkleinern.

In einer Ausführungsform der Erfindung ist vorgesehen, dass eine Oberseite des Sensors einen nach oben vorstehenden Sensorrand oder eine andere Randbegrenzung (die z. B. nicht direkt am Sensor angebunden ist) aufweist, wobei damit z. B. sehr vorteilhaft durch Formschluss eine Zentrierung des Tiegels auf dem Sensor realisiert sein kann.

Der Sensorrand (bzw. eine andere Randbegrenzung) kann z. B. ringförmig geschlossen über den gesamten Umfang des Sensors verlaufend ausgebildet sein. Alternativ kann der nach oben vorstehende Sensorrand (bzw. die Randbegrenzung) über den Umfang des Sensors betrachtet aber auch z. B. nur an einzelnen Stellen des Umfanges ausgebildet sein, z. B. an drei (oder mehr) äquidistant über den Umfang verteilten Stellen.

Alternativ oder zusätzlich zur Bewerkstelligung der genannten Zentrierung des Tiegels, sei es direkt durch Anlage einer Außenseite des Tiegels an dem Sensorrand (bzw. anderweitigen Randbegrenzung), oder indirekt durch Anlage einer Außenseite eines den Tiegel aufnehmenden Außentiegels an dem Sensorrand (bzw. anderweitigen Randbegrenzung), kann an dem Sensorrand (bzw. anderweitigen Randbegrenzung) auch vorteilhaft eine sichtbare Markierung (z. B. Markierungsvorsprung oder Markierungsvertiefung) der oben erwähnten Art und/oder ein Vorsprung bzw. eine Vertiefung für den oben erwähnten formschlüssigen Eingriff (zur Gewährleistung der vorbestimmten Drehstellung des Tiegels) ausgebildet sein.

Nochmals zurückkommend auf die Weiterbildung der Erfindung mit Verwendung eines Außentiegels, so ist in einer Ausführungsform vorgesehen, dass ein Boden des Außentiegels vollflächig an einem Boden des Tiegels anliegt. Zu diesem Zweck ist an der Innenseite des Außentiegelbodens eine Formgestalt vorzusehen, die einer Formgestalt an der Außenseite des Tiegelbodens entspricht. Die vollflächige Anlage besitzt den Vorteil eines guten thermischen Kontakts zwischen Tiegel und Außentiegel. In einer anderen Ausführungsform ist vorgesehen, dass ein Boden des Außentiegels nur an einer oder mehreren Kontaktflächen an einem Boden des Tiegels anliegt, deren Gesamtfläche wesentlich kleiner als eine Gesamtfläche der Innenseite des Außentiegelbodens ist (z. B. kleiner als 50%, insbesondere kleiner als 25% dieser Fläche). In einer Ausführungsform ist vorgesehen, dass ein Boden des Außentiegels entlang einer ringförmigen Kontaktfläche an einem Boden des Tiegels anliegt. Insbesondere kann hierbei die ringförmige Kontaktfläche kleiner als 50%, insbesondere kleiner als 25% der Gesamtfläche der Innenseite des Außentiegelbodens sein. Eine solche "teilflächige" Anlage besitzt den Vorteil, dass auch bei Vorliegen gewisser Fertigungstoleranzen und/oder z. B. thermisch bedingten Formänderungen in der Regel ein besser definierter bzw. gut reproduzierbarer thermischer Kontakt zwischen Tiegel und Außentiegel erreicht wird. In einer Ausführungsform ist vorgesehen, dass ein Mantel des Außentiegels vollflächig an einem Mantel des Tiegels anliegt. Zu diesem Zweck ist an der Innenseite des Außentiegelmantels eine Formgestalt vorzusehen, die einer Formgestalt an der Außenseite des Tiegelbodenmantels entspricht. Die vollflächige Anlage trägt zu einem guten thermischen Kontakt zwischen Tiegel und Außentiegel bei, und realisiert vorteilhaft zusätzlich eine Zentrierung des Tiegels im Außentiegel. In einer Ausführungsform ist vorgesehen, dass der Außentiegel und der Tiegel derart formgestaltet sind, dass damit durch Formschluss eine Zentrierung des Tiegels im Außentiegel realisiert ist. Diese Maßnahme trägt zu einer verbesserten Reproduzierbarkeit der Messbedingungen z. B. in dem Fall bei, dass der Tiegel aus dem Außentiegel herausgenommen wird, um sodann (für eine andere Messung) den Tiegel in einen anderen Außentiegel einzusetzen, oder in den Außentiegel einen anderen Tiegel einzusetzen. Bevorzugt ist eine Höhe des Außentiegels derart bemessen, dass der Außentiegel 1% bis 60%, insbesondere 10% bis 40%, einer Höhe des Tiegels überlappt. In einer Ausführungsform ist vorgesehen, dass das Außentiegelmaterial ein Metall oder eine Metalllegierung ist, insbesondere Wolfram oder eine Wolframlegierung. In einer anderen Ausführungsform ist vorgesehen, dass das Außentiegelmaterial ein Keramikmaterial ist, insbesondere ein Keramikmaterial auf Basis von Al₂O₃ oder Y₂O₃. Vorteilhaft kann mit der Verwendung eines der beiden vorgenannten Materialien als Außentiegelmaterial, Metall oder Metalllegierung bzw. Keramikmaterial, für die meisten Anwendungsfälle und oftmals bis hin zu hohen Temperaturen eine gute Materialkompatibilität des Außentiegelmaterials sowohl zum betreffenden Tiegel hin als auch zum betreffenden Sensor (bzw. dessen Oberseite) hin gewährleistet werden. In einer Ausführungsform ist der Tiegel (bzw. zumindest dessen Boden) aus Graphit gebildet. Insbesondere in diesem Fall kann das Außentiegelmaterial vorteilhaft z. B. als ein Metall oder eine Metalllegierung gewählt sein. In einer Ausführungsform ist das betreffende Tiegelmaterial ein Keramikmaterial. Insbesondere in diesem Fall kann das Außentiegelmaterial vorteilhaft z. B. als ein Metall oder Metalllegierung gewählt sein. In einer Ausführungsform ist das betreffende Tiegelmaterial ein Metall oder eine Metalllegierung. Insbesondere in diesem Fall kann das Außentiegelmaterial vorteilhaft z. B. als ein Keramikmaterial gewählt sein. Alternativ kommt auch z. B. Graphit in Betracht. In einer Ausführungsform ist der Sensor (zumindest in dem vom Außentiegel kontaktierten Bereich) aus einem Metall oder einer Metalllegierung gebildet. Insbesondere in diesem Fall kann das Außentiegelmaterial vorteilhaft z. B. als ein Keramikmaterial gewählt sein. In einer Ausführungsform ist der Sensor im relevanten Bereich aus einem Keramikmaterial gebildet. Insbesondere in diesem Fall kann das Außentiegelmaterial vorteilhaft z. B. als ein Metall oder eine Metalllegierung gewählt sein.

Bei manchen Materialkombinationen betreffend das Tiegelmaterial und das Sensormaterial kann im Rahmen einer Weiterbildung der Erfindung eine noch weitergehende Verbesserung dadurch erreicht werden, dass zwischen dem Tiegel und dem Sensor eine eingefügte "Unterleganordnung" vorgesehen ist, die eine den Tiegel kontaktierende "erste Schicht" aus einem ersten Material und eine den Sensor kontaktierende "zweite Schicht" aus einem vom ersten Material verschiedenen zweiten Material besitzt, wobei die erste Schicht von dem Außentiegel und dementsprechend das erste Material von dem Außentiegelmaterial gebildet ist, wohingegen die zweite Schicht von einer zusätzlichen Schicht bzw. zusätzlichen Unterlegscheibe (zwischen Außentiegel und Sensor) gebildet ist.

Bei dieser Weiterbildung können der Außentiegel und eine "zweite Unterlegscheibe" (zweite Schicht) vorteilhaft z. B. aus einem "Außentiegel-Unterlegscheiben-Set" entstammen, welches wenigstens einen Außentiegel und mehrere zweite Unterlegscheiben und/oder wenigstens eine zweite Unterlegscheibe und mehrere Außentiegel beinhaltet. Bevorzugt besteht die Unterleganordnung der erfindungsgemäßen Messanordnung hierbei aus dem Außentiegel und der zweiten Unterlegscheibe, d. h. ohne weitere Unterlegscheibe(n) zwischen Tiegel und Sensor.

In einer Abwandlung ist vorgesehen, dass die Unterleganordnung eine Verbundunterlegkonstruktion ist, welche den Außentiegel und die zweite Schicht (insbesondere z. B. unlösbar) miteinander verbunden beinhaltet. Damit ist die Unterleganordnung vorteilhaft bereits "gebrauchsfertig" zusammengesetzt. Bevorzugt beinhaltet die Verbundunterlegkonstruktion lediglich den Außentiegel und die zweite Schicht. Es soll jedoch nicht ausgeschlossen sein, dass dazwischen eine noch weitere Schicht beinhaltet ist, deren Material sich sowohl vom Außentiegelmaterial als auch vom Material der zweiten Schicht unterscheidet (z. B. fungierend als eine "Adapterschicht", beiderseits von welcher das Außentiegelmaterial und das zweite Material besonders gut anbindbar sind).

In einer anderen Weiterbildung der Erfindung (alternativ oder zusätzlich zur Verwendung eines "Außentiegels") ist vorgesehen, dass die Messanordnung ferner eine zwischen dem Tiegel und dem Sensor eingefügte "Unterlegscheibenanordnung" aufweist, die eine den Tiegel kontaktierende erste Schicht aus einem ersten Material und eine den Sensor kontaktierende zweite Schicht aus einem vom ersten Material verschiedenen zweiten Material besitzt. Eine solche Unterlegscheibenanordnung", d. h. eine oder mehrere Unterlegscheiben, ermöglicht es vorteilhaft, einen direkten Kontakt zwischen dem Tiegel und dem Sensor zu vermeiden, so dass eine Reaktion zwischen Tiegel- und Sensormaterial vermieden ist. Die den Tiegel kontaktierende erste Schicht kann aus einem besonders gut zu dem Tiegelmaterial kompatiblen ersten Material ausgebildet sein, wohingegen die den Sensor kontaktierende zweite Schicht aus einem besonders gut zum betreffenden Sensormaterial kompatiblen zweiten Material ausgebildet sein kann. Zweckmäßigerweise ist die Unterlegscheibenanordnung so ausgebildet, dass in Verwendungssituation der Tiegel nur die erste Schicht kontaktiert und der Sensor nur die zweite Schicht kontaktiert. Eine Höhe der Unterlegscheibenanordnung kann insbesondere z. B. in einem Bereich von 100 bis 500 µm liegen. In einer Ausführungsform ist vorgesehen, dass die Unterlegscheibenanordnung eine die erste Schicht bildende erste Unterlegscheibe und davon separat eine die zweite Schicht bildende zweite Unterlegscheibe aufweist. In einer anderen Ausführungsform ist vorgesehen, dass die Unterlegscheibenanordnung eine Verbundunterlegscheibe ist, welche die erste Schicht und die zweite Schicht (insbesondere z. B. unlösbar) miteinander verbunden beinhaltet. Die laterale Ausdehnung der Unterlegscheibenanordnung kann in Verbindung mit einem Sensor, der den erwähnten vorstehenden Sensorrand oder eine andere Randbegrenzung aufweist, insbesondere z. B. so bemessen sein, dass damit durch Formschluss eine Zentrierung der Unterlegscheibenanordnung auf dem Sensor realisiert wird. In einer bevorzugten Ausführungsform der Unterlegscheibenanordnung besitzen die erste Schicht und die zweite Schicht der Unterlegscheibenanordnung (und mithin in der Regel die gesamte Unterlegscheibenanordnung) in Draufsicht betrachtet jeweils eine kreisrunde Kontur. In einer Ausführungsform ist vorgesehen, dass das erste Material oder das zweite Material ein Metall oder eine Metalllegierung ist, insbesondere Wolfram oder eine Wolframlegierung. In einer Ausführungsform ist vorgesehen, dass das zweite Material oder das erste Material ein Keramikmaterial ist, insbesondere ein Keramikmaterial auf Basis von Al₂O₃ oder Y₂O₃. In einer Ausführungsform ist der Tiegel (bzw. zumindest dessen Boden) aus Graphit gebildet. Insbesondere in diesem Fall kann das erste Material vorteilhaft z. B. als ein Metall oder eine Metalllegierung gewählt sein. In einer Ausführungsform ist das betreffende Tiegelmaterial ein Keramikmaterial. Insbesondere in diesem Fall kann das erste Material vorteilhaft z. B. als ein Metall oder Metalllegierung gewählt sein. In einer Ausführungsform ist das betreffende Tiegelmaterial ein Metall oder eine Metalllegierung. Insbesondere in diesem Fall kann das erste Material vorteilhaft z. B. als ein Keramikmaterial gewählt sein. Alternativ kommt auch z. B. Graphit in Betracht. In einer Ausführungsform ist der Sensor (zumindest in dem von der zweiten Schicht kontaktierten Bereich) aus einem Metall oder einer Metalllegierung gebildet. Insbesondere in diesem Fall kann das zweite Material vorteilhaft z. B. als ein Keramikmaterial gewählt sein. In einer Ausführungsform ist der Sensor im relevanten Bereich aus einem Keramikmaterial gebildet. Insbesondere in diesem Fall kann das zweite Material vorteilhaft z. B. als ein Metall oder eine Metalllegierung gewählt sein.

Gemäß eines weiteren Aspekts der Erfindung wird die eingangs gestellte Aufgabe bei einem Verfahren zur thermischen Analyse einer Probe der eingangs genannten Art dadurch gelöst, dass in der Probenkammer eine Messanordnung der hier beschriebenen Art zum Anordnen der Probe und zum Messen der Probentemperatur eingesetzt wird. Die für die erfindungsgemäße Messanordnung hier beschriebenen Ausführungsformen und besonderen Ausgestaltungen können, einzeln oder in beliebiger Kombination, in analoger Weise auch als Ausführungsformen bzw. besondere Ausgestaltungen des erfindungsgemäßen Verfahrens zur thermischen Analyse vorgesehen sein.

In einer Ausführungsform umfasst das erfindungsgemäße Verfahren ein Anordnen des Tiegels auf dem Sensor, wobei der Tiegel in der vorbestimmten Drehstellung des Tiegels bezüglich des Sensors angeordnet wird.

In einer Ausführungsform erfolgt das Anordnen des Tiegels auf dem Sensor mit Hilfe eines Ausrichtens einer im Bereich der Außenseite des Tiegels vorgesehenen sichtbaren Markierung. Hierbei kann das Ausrichten z. B. an einer weiteren Markierung der Messanordnung erfolgen, die im Bereich des Sensors oder an einer stationär zum Sensor angeordneten Komponente der Messanordnung vorgesehen ist (Anordnen des Tiegels auf dem Sensor so, dass die beiden Markierungen drehwinkelmäßig "zur Deckung gebracht" werden).

Erfindungsgemäß erfolgt das Anordnen des Tiegels auf dem Sensor mit Hilfe eines Ineingriffbringens eines Vorsprunges in eine Vertiefung, wobei der Vorsprung am Sensor oder einer stationär zum Sensor angeordneten weiteren Komponente der Messanordnung und die Vertiefung im Bereich der Außenseite des Tiegels, oder umgekehrt, angeordnet sind.

Damit wird die vorbestimmte Drehstellung des Tiegels bezüglich des Sensors durch einen formschlüssigen Eingriff gewährleistet.

In einer Ausführungsform umfasst das Anordnen des Tiegels auf dem Sensor außerdem ein Zentrieren des Tiegels bezüglich des Sensors, wobei dieses Zentrieren insbesondere durch einen Formschluss realisiert sein kann (z. B. bei einem Tiegel von bestimmter Kontur in einem dazu passenden, von einem nach oben vorstehenden Sensorrand oder einer anderweitigen Randbegrenzung definierten Aufnahmeraum für ein unteres Ende des Tiegels).

Alternativ oder zusätzlich zur Bewerkstelligung der genannten Zentrierung des Tiegels, sei es z. B. direkt durch Anlage einer Außenseite des Tiegels an dem Sensorrand (bzw. anderweitigen Randbegrenzung), oder indirekt durch Anlage einer Außenseite eines den Tiegel aufnehmenden Außentiegels an dem Sensorrand (bzw. anderweitigen Randbegrenzung), kann an dem Sensorrand (bzw. anderweitigen Randbegrenzung) auch vorteilhaft eine sichtbare Markierung (z. B. Markierungsvorsprung oder Markierungsvertiefung) der oben erwähnten Art und/oder ein Vorsprung bzw. eine Vertiefung für den oben erwähnten formschlüssigen Eingriff (zur Gewährleistung der vorbestimmten Drehstellung des Tiegels) ausgebildet sein.

Das "Temperieren der Probe" kann allgemein ein Aufheizen und/oder Abkühlen der Probe beinhalten, wobei darüber hinaus auch zeitliche Phasen vorgesehen sein können, bei denen das der Temperierung zugrundeliegende Temperaturprogramm eine konstante Temperatur vorsieht. In einer Ausführungsform definiert das Temperaturprogramm die Kammertemperatur im Inneren der Probenkammer, wofür das Verfahren z. B. ein Messen der Kammertemperatur und darauf basierend eine Ansteuern einer Temperierungseinrichtung umfassen kann, bevorzugt mit einer Regelung (z. B. PID-Regelung) der Kammertemperatur. Abweichend davon kann das Temperaturprogramm alternativ auch einen vorbestimmten zeitlichen Verlauf der Probentemperatur definieren, wofür dementsprechend z. B. basierend auf der gemessenen Probentemperatur die entsprechende Ansteuerung (insbesondere Regelung) der Temperierungseinrichtung erfolgen kann.

Bevorzugt umfasst das Verfahren ein Aufzeichnen von Messdaten im Verlauf des Temperaturprogramms, insbesondere von Daten, die den temperaturabhängigen und/oder zeitabhängigen Verlauf wenigstens einer Temperatur von Kammertemperatur und Probentemperatur (bevorzugt beides) repräsentieren. Durch Auswertung derartiger Daten, während der Temperierung und/oder nach Abschluss des Temperaturprogramms, kann die wenigstens eine bei der thermischen Analyse interessierende Eigenschaft (z. B. Materialparameter) der dem Verfahren unterzogenen Probe ermittelt werden.

Abhängig von der konkret durchzuführenden thermischen Analyse kann bei dem erfindungsgemäßen Verfahren vorgesehen sein, dass in der Probenkammer zwei Messanordnungen mit einem Verdrehschutz der beschriebenen Art angeordnet sind, d. h. zwei Sensoren der beschriebenen Art mit jeweils darauf angeordnetem Tiegel der beschriebenen Art. In diesem Fall können in dem Verfahren gleichzeitig beide Tiegel bzw. ggf. auch gleichzeitig zwei Proben (z. B. "eigentliche Probe" und "Referenzprobe") einer gemeinsamen Temperierung in der Probenkammer unterzogen werden. Alternativ zur gleichzeitigen Temperierung von zwei Proben kann der zweite Tiegel während des erfindungsgemäßen Verfahrens z. B. auch "leer" (d. h. ohne darin gelagerte Probe bzw. Referenzprobe) eingesetzt werden.

Es versteht sich, dass bei einer derartigen Verwendung von zwei Messanordnungen der beschriebenen Art bei dem Verfahren zur thermischen Analyse in den meisten Anwendungsfällen diese zwei Messanordnungen identisch zueinander ausgebildet sein sollten.

Im Verlauf des Temperaturprogramms nimmt die Kammertemperatur zu wenigstens einem Zeitpunkt einen Minimalwert an und nimmt die Kammertemperatur zu wenigstens einem anderen Zeitpunkt einen Maximalwert an.

Der Einsatz der Erfindung ist besonders vorteilhaft, wenn im Rahmen der Durchführung von Messreihen thermischer Analysen wenigstens ein Mal wenigstens ein Tiegel von dem Sensor entfernt und danach derselbe oder ein anderer Tiegel wieder auf dem Sensor angeordnet wird (z. B. nach einem Wechsel der Probe und/oder sonstiger Veränderung an der betreffenden Messanordnung wie z. B. Hinzufügen/Entfernen/Wechseln eines Außentiegels, Hinzufügen/Entfernen/Wechseln wenigstens einer Unterlegscheibe etc.).

In einer Ausführungsform ist vorgesehen, dass die Kammertemperatur einen Maximalwert im Verlauf des Temperaturprogramms von mindestens 500°C besitzt. Für viele Anwendungsfälle kann der Maximalwert auch mindestens 750°C betragen, oder sogar mindestens 1000°C. Andererseits ist es für die meisten Anwendungsfälle ausreichend, im Verlauf des Temperaturprogramms einen Maximalwert der Kammertemperatur von maximal 2000°C vorzusehen. Was den Minimalwert im Verlauf des Temperaturprogramms anbelangt, so kann dieser z. B. bei "Raumtemperatur" oder etwas darüber liegen (z. B. im Bereich von 20°C bis100°C), insbesondere wenn eine beim Verfahren eingesetzte Temperierungseinrichtung keine Möglichkeit zur Kühlung unter die Raumtemperatur vorsieht. Ansonsten ist für die meisten Anwendungsfälle ein Minimalwert der Kammertemperatur im Bereich von z. B. -150°C bis 100°C ohne weiteres realisierbar (z. B. mit Peltier-Kühlung und/oder z. B. Kühlung mittels flüssigem Stickstoff).

In einer besonders vorteilhaften Ausführungsform ist das Verfahren zur thermischen Analyse ein DSC (Differential Scanning Calorimetry)-Verfahren wofür die beschriebene Messanordnung zweifach in der Probenkammer vorhanden ist und bei der Auswertung eines Messergebnisses (z. B. der bereits erwähnten Messdaten) insbesondere ein zeitabhängiger Verlauf einer Differenz der mittels der beiden Sensoren gemessenen Temperaturen ermittelt wird, insbesondere um damit energetische Effekte und/oder z. B. eine temperaturabhängige spezifische Wärmekapazität der Probe ermitteln zu können.

In einer Weiterbildung kombiniert das erfindungsgemäße Verfahren zur thermischen Analyse eine DSC mit wenigstens einer weiteren thermoanalytischen Methode wie insbesondere z. B. einer TGA (Thermogravimetrische Analyse).

In einer Ausführungsform ist das Verfahren zur thermischen Analyse eine "Hochtemperatur"-DSC, oder eine Kombination aus "Hochtemperatur"-DSC und TGA, wobei die Kammertemperatur und/oder die Probentemperatur einen Maximalwert im Verlauf des Temperaturprogramms von mindestens 500°C, insbesondere mindestens 750°C, oder sogar mindestens 1000°C, besitzt.

Die Erfindung wird nachfolgend anhand von Ausführungsbeispielen mit Bezug auf die beigefügten Zeichnungen weiter beschrieben. Es stellen jeweils schematisch dar:
- Fig. 1: eine Messanordnung für eine thermische Analyse einer Probe, mit einem Tiegel und einem Sensor, gemäß einer Ausführung dem Stand der Technik,
- Fig. 2: eine Messanordnung ähnlich derjenigen von Fig. 1, jedoch gemäß eines modifizierten Ausführungsbeispiels,
- Fig. 3: eine Messanordnung ähnlich derjenigen von Fig. 1, jedoch gemäß eines modifizierten Ausführungsbeispiels,
- Fig. 4: eine Messanordnung ähnlich derjenigen von Fig. 1, jedoch gemäß eines modifizierten Ausführungsbeispiels,
- Fig. 5: eine Messanordnung gemäß eines weiteren Ausführungsbeispiels,
- Fig. 6: eine Messanordnung gemäß eines weiteren Ausführungsbeispiels,
- Fig. 7: eine Messanordnung gemäß eines weiteren Ausführungsbeispiels,
- Fig. 8: eine Messanordnung gemäß eines weiteren Ausführungsbeispiels,
- Fig. 9: eine Messanordnung gemäß eines weiteren Ausführungsbeispiels,
- Fig. 10: eine Messanordnung gemäß eines weiteren Ausführungsbeispiels,
- Fig. 11: eine Querschnittskontur eines bei einer Messanordnung verwendbaren Tiegels gemäß eines (erfindungsgemäßen) Ausführungsbeispiels, und
- Fig. 12: eine Querschnittskontur ähnlich derjenigen von Fig. 11, jedoch gemäß eines modifizierten (erfindungsgemäßen) Ausführungsbeispiels.

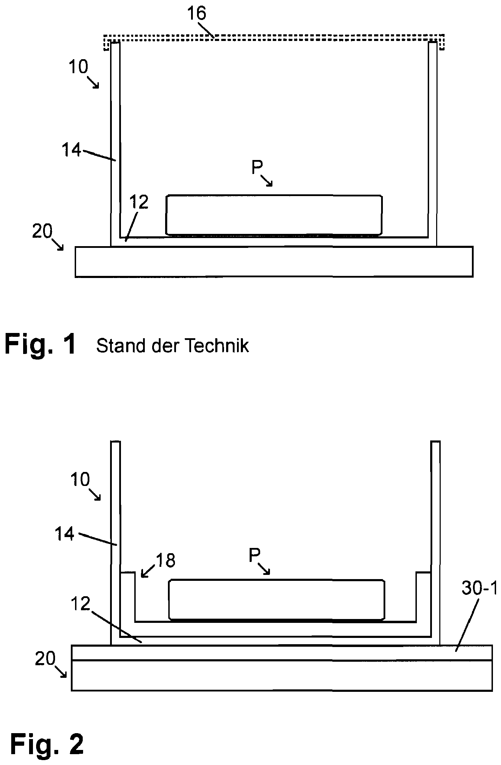

Fig. 1 zeigt eine schematische Seitenansicht einer vom Aufbau her aus dem Stand der Technik bekannten Messanordnung für eine thermische Analyse einer Probe P. Die Messanordnung weist einen Tiegel 10 zur Lagerung der Probe P in dem Tiegel 10 sowie einen Sensor 20 zur Messung einer Probentemperatur der Probe P bei auf dem Sensor 20 angeordnetem Tiegel 10 auf.

Der Tiegel 10 ist aus einem Tiegelmaterial wie typischerweise z. B. Graphit oder Metall gebildet und besitzt im dargestellten Ausführungsbeispiel eine kreiszylindrische Form mit einem kreisscheibenförmigen Boden 12, an dessen Rand sich nach oben aufragend ein zylindrischer Mantel 14 anschließt.

Hier verwendete Begriffe wie "oben" bzw. "Oberseite", "unten" bzw. "Unterseite", "lateral" etc. beziehen sich jeweils auf die Anordnung der betreffenden Komponente in Verwendungssituation (bei Durchführung der thermischen Analyse).

Der Tiegel 10 kann (optional) ferner eine in Fig. 1 gestrichelt eingezeichnete Abdeckung 16 aufweisen, welche den ansonsten nach oben hin offenen, von Boden 12 und Mantel 14 begrenzten Innenraum des Tiegels 10 abschließt. In manchen Anwendungsfällen ist in einer solchen Abdeckung 16 ein Loch ausgebildet, um einen Druckausgleich zwischen dem die Probe P beinhaltenden Innenraum und einem Aussenraum des Tiegels 10 vorzusehen.

Der Sensor 20 dient in der Verwendungssituation der Messanordnung dazu, einen Tiegel wie z. B. den dargestellten Tiegel 10, darauf anordnen zu können, um somit den Tiegel mitsamt gegebenenfalls beinhalteter Probe P (einschließlich "Referenzprobe") in einer Probenkammer definiert anzuordnen, und dazu, eine Temperatur an der Unterseite des Tiegels 10 bzw. somit die Probentemperatur (im Falle des die Probe P enthaltenden Tiegels 10) zu messen. Letzteres erfordert einen mehr oder weniger geringen Wärmeübergangswiderstand ausgehend von der Probe P, weiter über den Boden 12 des Tiegels 10 bis hin zu der eigentlichen Temperaturmesseinrichtung (z. B. Thermoelement) an der Oberfläche oder im Inneren des Sensors 20.

Im dargestellten Ausführungsbeispiel besitzt der Sensor 20 die Form einer kreisförmigen ebenen Scheibe mit einheitlicher Dicke, so dass sich in Zusammenwirkung mit dem ebenfalls kreisscheibenförmigen Boden 12 des Tiegels 10 ein guter thermischer Kontakt zwischen Probe P und Sensor 20 ergibt.

Abweichend von der dargestellten vollflächigen Anlage des Bodens 12 an einer Oberseite des Sensors 20 könnte jedoch auch eine andersartige thermische Kontaktierung vorgesehen sein, beispielsweise entlang einer ringförmigen Kontaktfläche zwischen dem Boden 12 und dem Sensor 20, z. B. indem der Boden 12 insgesamt oder zumindest auf seiner Unterseite mit einer Einbuchtung oder Wölbung vorgesehen wird.

Im dargestellten Beispiel ist eine laterale Ausdehnung des Sensors 20, gemessen als der Durchmesser der Kreisscheibenform, mindestens so groß oder wie dargestellt noch größer als eine entsprechende laterale Ausdehnung des Tiegels 10 im Bereich von dessen Boden 12.

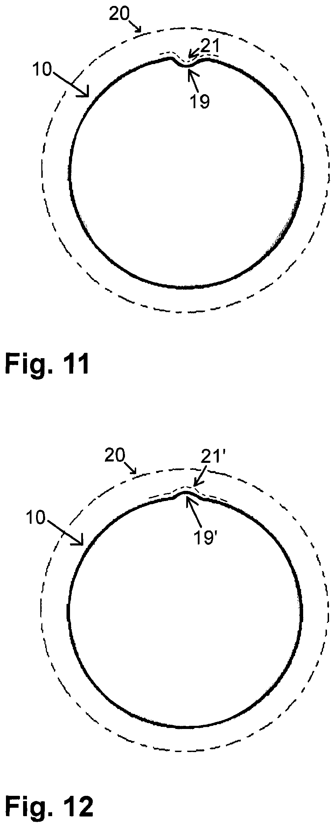

Sämtliche vorstehend mit Bezug auf das Ausführungsbeispiel von Fig. 1 beschriebenen Merkmale des Tiegels 10 und des Sensors 20, einschließlich jeweiliger beschriebener Abwandlungen, können auch bei dem Tiegel bzw. dem Sensor einer Messanordnung gemäß der vorliegenden Erfindung vorgesehen werden. Ausführungsbeispiele der vorliegenden Erfindung werden weiter unten noch mit Bezug auf die Fig. 11 und 12 beschrieben.

Nachteilig ist bei der in Fig. 1 dargestellten bekannten Messanordnung beispielsweise, dass es in lateraler (horizontaler) Richtung betrachtet keine gut definierte Anordnungsposition des Tiegels 10 auf dem Sensor 20 gibt, so dass vor allem bei wiederholtem Entfernen und wieder neu Anordnen des Tiegels 10 auf dem Sensor 20 die Reproduzierbarkeit entsprechender Messvorgänge der thermischen Analyse beeinträchtigt ist.

Außerdem ist es nachteilig, dass der Tiegel 10 in beliebiger bzw. zufälliger Drehstellung bezüglich des Sensors 20 angeordnet werden kann. Auch dies beeinträchtigt die Reproduzierbarkeit von mittels dieser Messanordnung durchgeführten Messungen.

Schließlich ist ein weiterer Nachteil z. B. die Gefahr einer Schädigung oder sogar Zerstörung des Sensors 20 durch chemische und/oder physikalische Reaktionen an der zwischen dem Tiegelmaterial und dem Sensormaterial bestehenden Kontaktfläche (Eine analoge Problematik ergibt sich für die Kontaktfläche zwischen Probenmaterial und Tiegelmaterial).

Die Fig. 2 bis 4 zeigen einige gegenüber dem Beispiel von Fig. 1 modifizierte Ausführungsbeispiele, die auf internem Stand der Technik der Anmelderin beruhen.

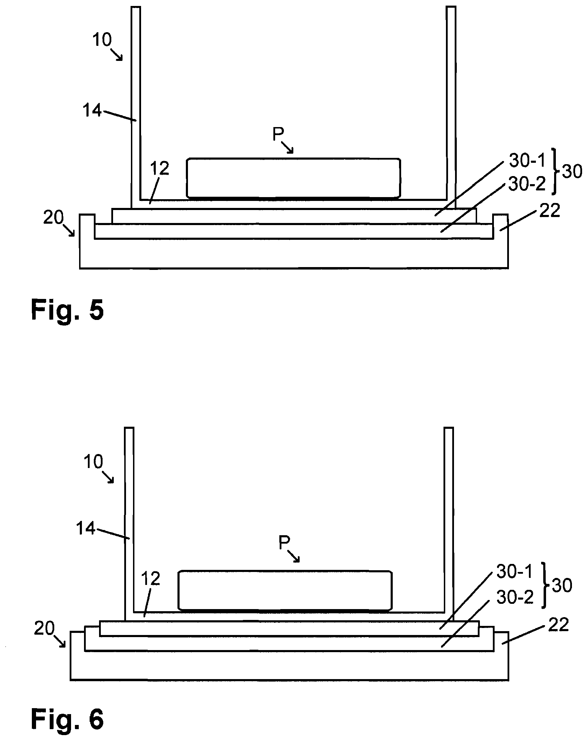

Bei der nachfolgenden Beschreibung der Ausführungsbeispiele gemäß der Fig. 2 bis 4, wie auch der noch weiteren Ausführungsbeispiele gemäß der Fig. 5 bis 12, werden für gleichwirkende Komponenten der jeweiligen Messanordnung die gleichen Bezugszahlen verwendet. Dabei wird im Wesentlichen nur auf die Unterschiede zu dem bzw. den bereits beschriebenen Ausführungsbeispielen eingegangen und im Übrigen hiermit ausdrücklich auf die Beschreibung der vorangegangenen Ausführungsbeispiele verwiesen.

Fig. 2 zeigt eine Messanordnung mit einem Tiegel 10 und einem Sensor 20, wobei jedoch gegenüber dem Beispiel von Fig. 1 eine erste Modifikation darin besteht, dass zwischen einer z. B. metallischen Probe P und dem z. B. metallischen Tiegel 10 ein "Innentiegel" 18 eingefügt ist, um Reaktionen zwischen dem Material der Probe P und dem Material des Tiegels 10 bei hohen Temperaturen zu vermeiden. Im dargestellten Beispiel ist der Innentiegel 18 aus einem Keramikmaterial gebildet.

Was die Formgestaltung eines derartigen Innentiegels anbelangt, so ist diese bevorzugt wie bei dem dargestellten Innentiegel 18 für eine möglichst gut definierte und/oder möglichst großflächige Anlage (der Außenseite des Innentiegels 18 an der Innenseite des Tiegels 10) an die Formgestaltung des Tiegels 10 angepasst. Der dargestellte Innentiegel 18 weist ähnlich dem Tiegel 10 einen kreisscheibenförmigen Boden und einen sich nach oben aufragend daran anschließenden zylindrischen Mantel auf, wobei im dargestellten Beispiel sowohl der Boden als auch der Mantel jeweils vollflächig an der jeweiligen Innenseite des Bodens bzw. des Mantels des Tiegels 10 anliegt.

Diese Modifikation besitzt z. B. den Vorteil, dass eine größere Freiheit bei der Auswahl des Tiegelmaterials des Tiegels 10 geschaffen wird.

Eine zweite Modifikation besteht darin, dass die Messanordnung ferner eine zwischen dem Tiegel 10 und dem Sensor 20 eingefügte Unterlegscheibe 30-1 aufweist, die eine den Tiegel 10 an dessen Boden 12 kontaktierende Oberseite und eine den Sensor 20 an dessen Oberseite kontaktierende Unterseite besitzt.

Diese Modifikation besitzt z. B. den Vorteil, dass damit eine größere Freiheit bei der Auswahl des Tiegelmaterials und des Sensormaterials geschaffen wird.

Im dargestellten Beispiel ist die Unterlegscheibe 30-1 aus einem Keramikmaterial gebildet. Mittels der Unterlegscheibe 30-1 ist ein Diffusionsverschweißen und eine chemische Reaktion zwischen dem Tiegelmaterial und dem Sensormaterial des (in der Regel sehr "kostbaren") Sensors verhindert, was insbesondere in Verwendungssituationen mit dabei auftretenden relativ hohen Temperaturen von großem Vorteil ist.

Die Beispiele gemäß der Fig. 1 und 2 haben auch den Nachteil, dass der Tiegel 10 nicht selbstzentriert gegenüber dem Sensor 10 ist, sondern der Tiegel 10 z. B. verrutschen kann bzw. von einem Benutzer z. B. in verschiedenen lateralen Positionen auf dem Sensor 20 angeordnet werden kann, was sich nachteilig auf die Reproduzierbarkeit von im Rahmen der thermischen Analyse durchgeführte Messungen auswirkt.

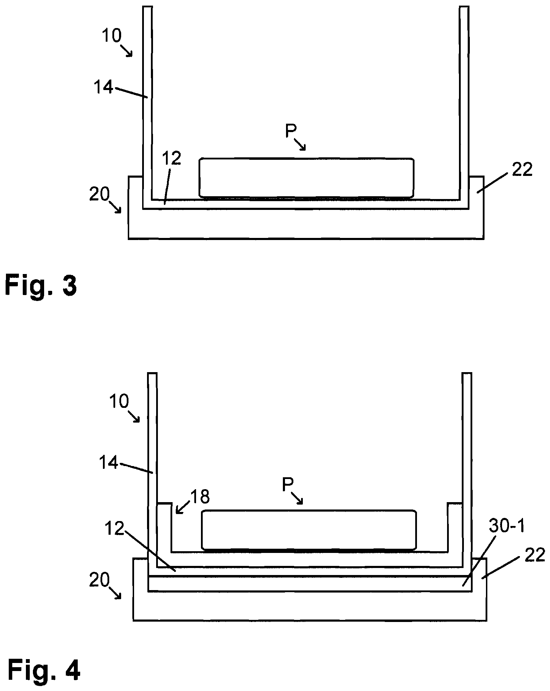

Zur Vermeidung dieses Nachteils kommen Ausführungen in Betracht, die beispielhaft in den Fig. 3 und 4 gezeigt sind.

Fig. 3 zeigt eine Messanordnung, die gegenüber dem Beispiel von Fig. 1 dadurch modifiziert ist, dass die Oberseite des Sensors 20 einen nach oben vorstehenden Sensorrand 22 aufweist und damit durch Formschluss eine Zentrierung des Tiegels 10 auf dem Sensor 20 realisiert ist. Der Sensorrand 22 kann z. B. ringförmig geschlossen über den gesamten Umfang des Sensors 20 verlaufend ausgebildet sein.

Abweichend von der Ausführungsform gemäß Fig. 3 könnte der nach oben vorstehende Sensorrand 22 über den Umfang des Sensors 20 betrachtet auch nur an einzelnen Stellen dieses Umfanges ausgebildet sein.

Der Formschluss kann abweichend von dem dargestellten Beispiel anstatt durch den Sensorrand 22 auch durch eine andere Randbegrenzung realisiert sein, worunter eine Komponente der Messanordnung zu verstehen ist, die stationär bezüglich des Sensors 20 derart angeordnet ist, dass diese für den Tiegel 10 in lateraler Richtung betrachtet eine Begrenzung darstellt, was dessen Anordenbarkeit auf dem Sensor 20 anbelangt.

Fig. 4 zeigt eine Messanordnung, bei der die Oberseite eines Sensors 20 einen nach oben vorstehenden Sensorrand 22 aufweist (ähnlich Fig. 3), so dass damit durch Formschluss wieder eine Zentrierung des Tiegels 10 auf den Sensor 20 realisiert ist. Außerdem ist eine Unterlegscheibe 30-1 (ähnlich Fig. 2) vorgesehen, wobei gegenüber dem Beispiel von Fig. 2 eine Modifikation darin besteht, dass die Unterlegscheibe 30-1 in deren lateraler Ausdehnung soweit verkleinert ist, dass diese in dem durch den Sensorrand 20 definierten Raum Platz findet.

Mit Hilfe eines Innentiegels 18 und/oder einer Unterlegscheibe 30-1 lassen sich in der Praxis nachteiligerweise jedoch nicht alle gewünschten Sensor-Tiegel-Probe-Materialkombinationen bewältigen, was unerwünschte Reaktionen zwischen Sensor und Tiegel sowie zwischen Tiegel und Probe anbelangt. Beispielsweise müssen manche Proben in einem Tiegel 10 aus Graphit angeordnet werden, wodurch es bei hohen Temperaturen zu Reaktionen mit dem Sensor 20 kommen kann. Eine keramische Unterlegscheibe 30-1 schafft keine zuverlässige Abhilfe, da sie bei hohen Temperaturen mit dem Graphittiegel reagieren kann.

Zur Vermeidung dieser Problematik können Ausführungen vorgesehen werden, die nachfolgend beispielhaft mit Bezug auf die Fig. 5, 6, 8 und 10 beschrieben werden.

Fig. 5 zeigt eine Messanordnung mit einem Tiegel 10 und einem Sensor 20, wobei gegenüber dem Beispiel von Fig. 1 eine Besonderheit darin besteht, dass die Messanordnung ferner eine zwischen dem Tiegel 10 und dem Sensor 20 eingefügte Unterlegscheibenanordnung 30 aufweist, die eine den Tiegel 10 kontaktierende erste Schicht 30-1 aus einem ersten Material und eine den Sensor 20 kontaktierende zweite Schicht 30-2 aus einem vom ersten Material verschiedenen zweiten Material besitzt.

Die Unterlegscheibenanordnung 30 kann hierbei eine die erste Schicht 30-1 bildende erste Unterlegscheibe und davon separat eine die zweite Schicht 30-2 bildende zweite Unterlegscheibe aufweisen.

Diese Variante kann auch als Modifikation des Beispiels von Fig. 2 gesehen werden, wobei der Unterschied der Ausführungsform gemäß Fig. 5 dann darin besteht, dass zwischen dem Tiegel 10 und dem Sensor 20 eine weitere (zweite) Unterlegscheibe (Schicht 30-2) eingefügt ist.

Bei dieser Variante kann insbesondere bei Graphit als Tiegelmaterial vorgesehen sein, dass die erste Unterlegscheibe bzw. erste Schicht 30-1 aus einem metallischen Material (z. B. Wolfram oder z. B. Wolframlegierung) gebildet ist und die zweite Unterlegscheibe bzw. zweite Schicht 30-2 aus einem Keramikmaterial gebildet ist.

Abweichend davon ist bei Fig. 5 auch eine Variante möglich, bei der die Unterlegscheibenanordnung 30 eine Verbundunterlegscheibe ist, welche die erste Schicht 30-1 und die zweite Schicht 30-2 miteinander verbunden beinhaltet (z. B. miteinander verschweißt).

Diese Variante eignet sich z. B. gut für den Fall, dass das erste Material und das zweite Material miteinander verschweißbar sind, also hierfür z. B. eine geeignete Kombination zweier Metalle bzw. Metallegierungen gewählt wird.

Die miteinander verbundenen Schichten der Verbundunterlegscheibe können z. B. auch so ausgebildet sein, dass die eine Schicht als eine Sputterschicht auf der anderen Schicht ausgebildet ist.

In dem Beispiel von Fig. 5 ist außerdem der Sensor 20 mit einem nach oben vorstehenden Sensorrand 22 der bereits (mit Bezug auf die Fig. 3 und 4) beschriebenen Art ausgebildet, wodurch über einen Formschluss eine Zentrierung zumindest der zweiten Schicht 30-2 bzw. bei Einsatz einer Verbundunterlegscheibe (Schichten 30-1 und 30-2 miteinander verbunden) die Unterlegscheibenanordnung 30 als solche auf dem Sensor 20 zentriert wird.

In dem Beispiel von Fig. 5 ist außerdem die laterale Ausdehnung der ersten Schicht 30-1 kleiner als die laterale Ausdehnung der zweiten Schicht 30-2 gewählt, um durch ein laterales Hervorstehen des Umfanges der zweiten Schicht 30-2 ringsherum um den Umfang der ersten Schicht 30-1 zuverlässig einen Kontakt der ersten Schicht 30-1 zum Sensor 20 (am Sensorrand 22) zu vermeiden.

Insbesondere um selbst bei separater Gestaltung der beiden Schichten 30-1 und 30-2 ein Verrutschen bzw. eine Fehlpositionierung der oberen Schicht 30-1 zu verhindern bzw. um abweichend von Fig. 5 dann auch eine Zentrierung der oberen Scheibe 30-1 zu realisieren, kann eine Ausführung wie beispielhaft in Fig. 6 gezeigt eingesetzt werden.

Fig. 6 zeigt eine Messanordnung mit einem Tiegel 10 und einem Sensor 20, wobei gegenüber dem Beispiel von Fig. 5 eine Modifikation darin besteht, dass in der Unterlegscheibenanordnung 30 die erste Schicht 30-1 an einer Oberseite der zweiten Schicht 30-2 eigebettet ist.

Im Beispiel von Fig. 6 ist hierbei vorgesehen, dass in der Unterlegscheibenanordnung 30 die erste Schicht 30-1 nach oben hin die zweite Schicht 30-2 überragt. Die erste Unterlegscheibe bzw. Schicht 30-1 ragt nach oben leicht über den Rand der zweiten Unterlegscheibe bzw. Schicht 30-2 hinaus, so dass eine unerwünschte Berührung zwischen dem Tiegel 10 (z. B. aus Graphit) und der Schicht 30-2 (z. B. aus Keramikmaterial) ausgeschlossen wird.

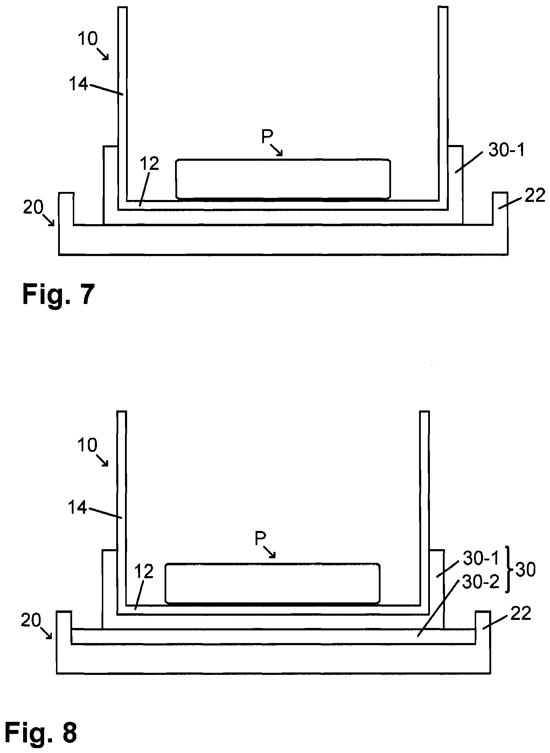

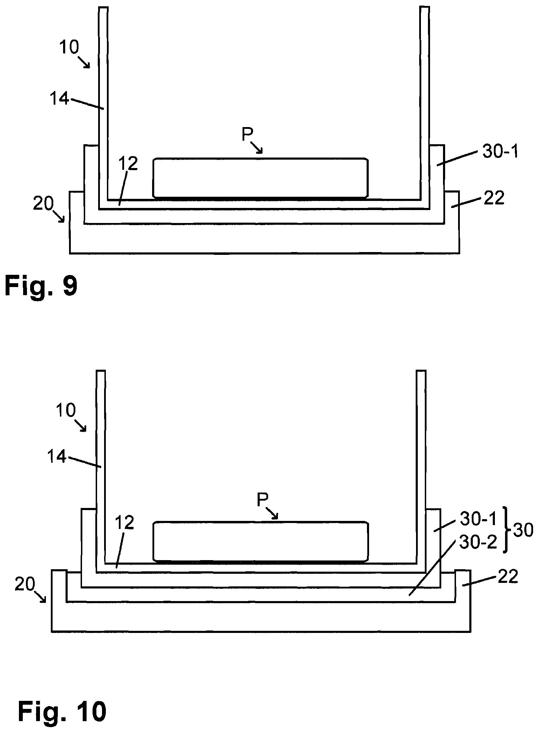

Betreffend die bei den Fig. 5 und 6 (wie auch nachfolgend bei den Fig. 8 und 10) beschriebene Unterlegscheibenanordnung (mit Schichten 30-1, 30-2) kommt neben der Ausgestaltung mit zwei voneinander separaten Unterlegscheiben insbesondere z. B. eine Verbundunterlegscheibe in Betracht, bei welcher eines von erster Schicht 30-1 und zweiter Schicht 30-2 durch Besputtern oder anderweitiges Beschichten (z. B. der jeweils anderen dieser beiden Schichten) gebildet ist. Zum Beispiel kann an der Oberseite einer keramischen zweiten Schicht 30-2 durch Besputtern die erste Schicht 30-1 aus einem metallischen Material (Metall oder Metallegierung) gebildet sein.

Die Stapelung zweier separater Unterlegscheiben 30-1, 30-2 besitzt die Vorteile, dass jede einzelne Unterlegscheibe je nach Anwendungsfall auch alleine (oder in Kombination mit einer anderen zweiten Unterlegscheibe) benutzt werden kann, und dass im Falle einer Kontamination einer der Unterlegscheiben (insbesondere z. B. der Unterlegscheibe 30-1) nur diese ausgetauscht werden muss. In letzterem Falle wäre die kontaminierte Schicht gewissermaßen eine leicht und kostengünstig ersatzbare Nutzschicht.

Die beschriebene Unterlegscheibenanordnung ist insbesondere vorteilhaft in Anwendungsfällen, bei denen das Tiegelmaterial Graphit und das Sensormaterial ein metallisches Material ist. Abweichend davon kann jedoch auch z. B. ein Tiegel aus metallischem Material (insbesondere z. B. Wolfram oder Wolframlegierung) vorgesehen sein und/oder ein zusätzlicher Innentiegel (insbesondere z. B. aus Graphit).

Fig. 7 zeigt eine Messanordnung mit einem Tiegel 10 und einem Sensor 20, mit der Besonderheit, dass die Messanordnung ferner einen "Außentiegel" 30-1 zur Lagerung des Tiegels 10 in dem Außentiegel 30-1 aufweist, wobei der Tiegel 10 aus einem Tiegelmaterial und der Außenmaterial 30-1 aus einem von dem Tiegelmaterial verschiedenen Außentiegelmaterial gebildet ist.

Gegenüber den Beispielen von Fig. 2 und Fig. 4 besteht eine Modifikation darin, dass anstelle einer ebenen plattenförmigen "Unterlegscheibe" 30-1 (Fig. 2 und 4) der besagte "Außentiegel" 30-1 (Fig. 7) vorgesehen ist, um einen Kontakt zwischen dem Tiegelmaterial und dem Sensormaterial zu vermeiden.

In dieser Hinsicht sei angemerkt, dass ein "Außentiegel" im Sinne der Erfindung aus einem Basiskörper besteht oder einen Basiskörper umfasst, nachfolgend auch "Außentiegelkorpus" genannt, der zumindest annähernd die Form einer Schale oder eines Topfes besitzt, wobei im Hinblick auf den Verwendungszweck (Lagerung des Tiegels) der Außentiegelkorpus zumindest einen als (Außentiegelkorpus-)"Mantel" zu bezeichnenden Abschnitt aufweist, der eine seitliche Begrenzung des Außentiegelkorpus darstellt, sowie optional einen als (Außentiegelkorpus-)"Boden" zu bezeichnenden Abschnitt aufweisen kann, der einen (in Verwendungssituation) dem Sensor zugewandten unteren Endabschnitt des Au-ßentiegelkorpus darstellt und an der Unterseite des Mantels angebunden ist. Ein auf der Innenseite des Mantels von dem Mantel (und dem ggf. vorhandenen Boden) begrenzter Innenraum des Außentiegels ist hierbei so zu bemessen, dass der Tiegel der Messanordnung darin gelagert werden kann.

Bei dem Ausführungsbeispiel von Fig. 7 besitzt derAußentiegel 30-1 eine kreiszylindrische Form mit einem kreisscheibenförmigen Boden, an dessen Rand sich nach oben aufragend ein zylindrischer Mantel anschließt.

Im dargestellten Beispiel liegt der Boden des Außentiegels 30-1 vollflächig an einem Boden 12 des Tiegels 10 an. Alternativ könnte jedoch auch z. B. vorgesehen sein, dass der Boden des Außentiegels 30-1 entlang einer ringförmigen Kontaktfläche an dem Boden 12 des Tiegels 12 anliegt.

Dies kann z. B. dadurch realisiert werden, dass abweichend von dem Beispiel gemäß Fig. 7 der Boden 12 insgesamt oder zumindest auf seiner Unterseite mit einer Einbuchtung oder Wölbung vorgesehen wird. Alternativ oder zusätzlich könnte z. B. der Boden des Außentiegels 30-1 an dessen Oberseite mit einer entsprechenden Einbuchtung oder Wölbung vorgesehen sein. Des weiteren kommt z. B. in Betracht, in einem lateral betrachtet mittleren Bereich des Bodens des Außentiegels 30-1 eine Materialaussparung (Vertiefung, oder sogar eine Durchgangsöffnung im Boden) vorzusehen, so dass der Tiegel 10 nurmehr auf einem kreisringförmigen Bodenabschnitt des Außentiegels 30-1 aufliegt.

In diesem Zusammenhang sei angemerkt, dass der Außentiegel abweichend von dem Beispiel gemäß Fig. 7 auch ganz ohne Boden formgestaltet sein könnte, insbesondere z. B. umfassend einen sich in Vertikalrichtung von oben nach unten hin verjüngenden Mantel, an dessen Innenseite der betreffende Tiegel aufliegt und somit gelagert wird. Bei dieser Variante ist es bevorzugt, dass der betreffende Sensor nicht wie in Fig. 7 gezeigt eine größtenteils ebene Oberseite aufweist, sondern in einem lateral betrachtet mittleren Bereich eine (z. B. kreisförmige) Einbuchtung oder Aussparung aufweist, an deren Rand (z. B. ringförmig geschlossen verlaufend) der Außentiegel aufliegt. Die Einbuchtung bzw. Aussparung des Sensors kann dabei so tief bemessen bzw. formgestaltet sein, dass kein Abschnitt des betreffenden Tiegels den Sensor kontaktiert, selbst wenn ein Abschnitt des Tiegels nach unten hin ein unteres Ende des Außentiegelmantels überragt.

Zurückkommend auf das Beispiel von Fig. 7 ist bei diesem Beispiel vorgesehen, dass der Mantel des Außentiegels 30-1 vollflächig an dem Mantel 14 des Tiegels 10 anliegt. Mit anderen Worten ist hier ein Innendurchmesser des Mantels des Außentiegels 30-1 in Anpassung an einen Außendurchmesser des Mantels 14 so bemessen, dass der Tiegel 10 mit allenfalls wenig Spiel in den Außentiegel 30 eingeschoben werden kann.

Eine derartige vollflächige Anlage zwischen dem Mantel des Tiegels und dem Mantel des Außentiegels kann (abweichend von Fig. 7) auch vorteilhaft vorgesehen sein, wenn beide Mäntel sich z. B. von oben nach unten betrachtet verjüngen, beispielsweise beide eine kegelstumpfförmige Formgestaltung (mit gleichem Neigungswinkel) besitzen.

Bei derartigen Ausführungen kann vorteilhaft auch eine Ausgestaltung vorgesehen sein, die auch bei dem Beispiel von Fig. 7 realisiert ist und darin besteht, dass der Außentiegel und der Tiegel derart formgestaltet sind, dass damit durch Formschluss eine Zentrierung des Tiegels im Außentiegel realisiert ist. Diese Maßnahme verbessert die Reproduzierbarkeit der mittels der Messanordnung durchgeführten Messungen.

Ferner ist bei dem gezeigten Beispiel von Fig. 7 vorgesehen, dass der Außentiegel 30-1 etwa 30% einer Höhe des Tiegels 10 überlappt. Zumeist ist eine derartige Überlappung im Bereich von 10% bis 40% bevorzugt.

Unter der beispielhaften Annahme, dass sowohl der Tiegel 10 als auch der Sensor 20 jeweils aus einem metallischen Material gebildet sind, eignet sich als Außentiegelmaterial insbesondere z. B. Keramikmaterial. Der Außentiegel 30-1 übernimmt in diesem Fall gewissermaßen die Rolle der in Fig. 2 gezeigten Unterlegscheibe 30-1 (nur dass bei dem Beispiel von Fig. 7 kein Innentiegel vorgesehen ist). Der Außentiegel (Fig. 7) verhindert vorteilhaft einen unerwünschten Kontakt zwischen dem Tiegel 10 und dem Sensor 20 auch an der Seite des Tiegels 10.

Fig. 8 zeigt eine Messanordnung mit einem Tiegel 10 und einem Sensor 20 wobei eine Modifikation gegenüber dem Beispiel von Fig. 7 darin besteht, dass die Messanordnung ferner eine zwischen dem Außentiegel 30-1 und dem Sensor 20 eingefügte Unterlegscheibe 30-2 aufweist.

Durch diese Maßnahme wird gegenüber der Ausführungsform gemäß Fig. 7 insbesondere der Vorteil erreicht, dass eine größere Freiheit bei der Auswahl des Tiegelmaterials und/oder Sensormaterials geschaffen ist.

Das Beispiel von Fig. 8 kann gemäß einer alternativen Betrachtungsweise auch als eine Modifikation der bereits beschriebenen Ausführungsformen mit "Unterlegscheibenanordnung" (vgl. Fig. 5, 6 und 10) angesehen werden. Bei dieser Betrachtungsweise verkörpert der Außentiegel 30-1 bzw. zumindest dessen Boden die "erste Schicht" 30-1 einer Unterlegscheibenanordnung 30 und die Unterlegscheibe 30-2 eine "zweite Schicht" 30-2 der Unterlegscheibenanordnung 30.

Im Hinblick auf diese alternative Betrachtungsweise sei ferner angemerkt, dass abweichend von dem Beispiel gemäß Fig. 8 die beiden Komponenten 30-1, 30-2 auch (z. B. unlösbar) miteinander verbunden vorgesehen sein könnten. Eine Verbindung der Komponenten 30-1, 30-2 kann hierbei z. B. so ausgestaltet/realisiert sein, wie dies für eine "Verbundunterlegscheibe" bereits erläutert wurde.

Bei den in den Fig. 7 und 8 gezeigten Messanordnungen ist der Tiegel 10 gegenüber dem Sensor 20 nicht selbstzentrierend. Um dies zu realisieren, können Ausführungsformen eingesetzt werden, die beispielhaft in den Fig. 9 und 10 dargestellt sind.

Fig. 9 zeigt eine Messanordnung mit einem Tiegel 10 und einem Sensor 20, wobei gegenüber dem Beispiel von Fig. 7 eine Modifikation darin besteht, dass mit dem Sensorrand 22 durch Formschluss eine Zentrierung eines Außentiegels 30-1 auf dem Sensor 20 realisiert ist.

Bei dem Beispiel von Fig. 9 wird der Außentiegel 30-1 durch dessen direkte Anlage an dem Sensorrand 22 zentriert. Im hier angenommenen Fall einer kreiszylindrischen Formgestaltung des Außentiegels 30-1 und des nach oben vorstehenden Sensorrands 22 bedeutet dies eine korrespondierende Bemessung zwischen einem Außendurchmesser des Außentiegels 30-1 und einem Innendurchmesser des Sensorrands 22.

Fig. 10 zeigt eine Messanordnung mit einem Tiegel 10 und einem Sensor 20, wobei gegenüber dem Beispiel von Fig. 8 eine Modifikation darin besteht, dass die Unterlegscheibe 30-2 (bzw. die zweite Schicht 30-2 der Unterlegscheibenanordnung 30) mittels des Sensorrands 22 durch Formschluss auf dem Sensor 20 zentriert ist. Eine weitere Modifikation besteht darin, dass eine "Einbettung" (der mit Bezug auf die Fig. 6 bereits beschriebenen Art) des Außentiegels 30-1 (bzw. der ersten Schicht 30-1) an der Oberseite der Unterlegscheibe 30-2 (bzw. der zweiten Schicht 30-2) vorgesehen ist.

In einer alternativen Betrachtungsweise kann die Ausführungsform gemäß Fig. 10 auch als eine Modifikation gegenüber dem Beispiel von Fig. 6 betrachtet werden, die darin besteht, dass anstelle der ersten Schicht 30-1 (Fig. 6) ein Außentiegel 30-1 (Fig. 10) vorgesehen ist, wodurch in diesem Beispiel letzlich eine Zentrierung des Tiegels 10 erreicht wird.

Bei dem Beispiel von Fig. 10 wird der Außentiegel 30-1 ähnlich wie bei Fig. 9 durch einen Formschluss auf dem Sensor 20 zentriert, jedoch nicht durch eine direkte Anlage des Au-ßentiegels 30-1 am Sensorrand 22, sondern mittelbar über die ersichtliche Zentrierung der Unterlegscheibe 30-2 (bzw. zweiten Schicht 30-2 einer Unterlegscheibenanordnung 30) zentriert. Die Unterlegscheibe 30-2 liegt direkt am Sensorrand 22 an.

Was das Außentiegelmaterial anbelangt, so kann dies vorteilhaft für eine entsprechende Materialkompatibilität mit dem Material des betreffenden Tiegels 10 und dem nach unten hin angrenzenden Material, z. B. Sensormaterial oder ggf. Material einer Unterlegscheibe 30-2 bzw. zweiten Schicht 30-2, geeignet ausgewählt werden.

In entsprechenden Anwendungsfällen kann das Außentiegelmaterial des Außentiegels 30-1 z. B. ein Metall oder eine Metallegierung sein, insbesondere z. B. Wolfram oder eine Wolframlegierung.

In anderen Anwendungsfällen kann auch z. B. ein Außentiegelmaterial des Außentiegels 30-1 vorteilhafter sein, welches als ein Keramikmaterial gewählt ist, beispielsweise auf Basis von Al₂O₃ oder Y₂O₃.

Bei einer erfindungsgemäßen Messanordnung können die vorstehend mit Bezug auf die Fig. 1 bis 10 beschriebenen Merkmale und Ausgestaltungsdetails der einzelnen Komponenten beliebig miteinander kombiniert werden, soweit die betreffenden Merkmale bzw. Ausgestaltungen miteinander kompatibel sind.

Der bei den Beispielen gemäß der Fig. 1 bis 10 bereits diskutierte Aspekt einer Zentrierung des Tiegels 10 betraf nur die laterale Positionierung des Tiegels 10 auf dem Sensor 20. Um die Reproduzierbarkeit der im Rahmen der thermischen Analyse durchgeführten Messungen zu erhöhen, wäre es auch von Vorteil, wenn der Tiegel 10 in einfacher Weise für solche Messungen stets in einer vorbestimmten Drehstellung bezüglich des Sensors 20 angeordnet werden könnte. Insbesondere bei zumindest annähernd Rotationssymmetrisch ausgebildeten Tiegeln in bekannten Messanordnungen ist in der Praxis davon auszugehen, dass die Tiegel von Benutzern in beliebigen bzw. zufälligen Drehstellungen bezüglich des Sensors angeordnet werden.

Um dieses Problem zu beseitigen, wird gemäß der vorliegenden Erfindung eine Messanordnung, insbesondere z. B. eine Messanordnung der mit Bezug auf die Fig. 1 bis 10 hier bereits beschriebenen Art, mit einem Verdrehschutz für den Tiegel ausgebildet, um bei auf dem Sensor 20 angeordnetem Tiegel 10 eine vorbestimmte Drehstellung des Tiegels bezüglich des Sensors 20 vorzusehen.

Beispielhafte Ausführungsbeispiele eines solchen erfindungsgemäßen Verdrehschutzes werden mit Bezug auf die Fig. 11 und 12 erläutert.

Fig. 11 zeigt in schematischer Draufsicht eine im wesentlichen kreisförmige Außenkontur eines Tiegels 10, der auf einem (gestrichelt eingezeichneten) Sensor 20 angeordnet ist.

In diesem Ausführungsbeispiel wird eine vorbestimmte Drehstellung des Tiegels 10 bezüglich des Sensors 20 durch einen formschlüssigen Eingriff eines Vorsprungs 21 in eine Vertiefung 19 gewährleistet, wobei in Fig. 11 der Vorsprung 21 am Sensor 20 (oder einer stationär zum Sensor 20 angeordneten weiteren Komponente der betreffenden Messanordnung) angeordnet ist und die Vertiefung 19 direkt an der Außenseite eines Mantels des Tiegels 10 angeordnet ist.

Alternativ zu der gezeigten Anordnung der Vertiefung 19 direkt an der Außenseite des Tiegelmantels kommt im Rahmen der Erfindung auch in Betracht, die Vertiefung 19 an anderer Stelle im Bereich der Außenseite des Tiegels 10 anzuordnen, beispielsweise an einer Außenseite einer den Tiegel 10 umgebenden Komponente wie z. B. eines "Außentiegels" der oben bereits beschriebenen Art.

Unter der Annahme, dass zwischen verschiedenen Messungen im Rahmen einer oder mehrerer thermischer Analysen der Tiegel 10 nicht von einem zugehörigen Außentiegel getrennt wird, ist dann ein unmittelbar nur für den Außentiegel vorgesehener Verdrehschutz gleichbedeutend mit einem Verdrehschutz für den Tiegel 10.

Alternativ zu einem Außentiegel als Anbringungsort für eine den Verdrehschutz gewährleistende Vertiefung käme des Weiteren in Betracht, eine derartige Vertiefung an einer eigens hierfür vorgesehenen, den betreffenden Tiegel 10 manschettenartig umgebenden Komponente anzuordnen.

Was die Anordnung des Vorsprungs 21 am Sensor 20 (oder einer stationär zum Sensor 20 angeordneten weiteren Komponente) anbelangt, so kann bei Vorhandensein eines an der Oberseite des Sensors 20 nach oben vorstehenden "Sensorrandes" der bereits beschriebenen Art im Rahmen der Erfindung insbesondere vorgesehen sein, dass der Vorsprung 21 direkt an der Innenseite (Innenumfang) des Sensorrandes angeordnet ist.

Fig. 12 zeigt ein Ausführungsbeispiel eines Tiegels 10 auf einem Sensor 20, wieder z. B. in einer Messanordnung gemäß einer der Fig. 1 bis 10, wobei eine Modifikation gegenüber dem Beispiel von Fig. 11 gewissermaßen nur darin besteht, dass die Anordnungsstellen des Vorsprungs und der Vertiefung miteinander vertauscht sind. Demnach ist bei dem Beispiel von Fig. 12 im Bereich der Außenseite des Tiegels 10 ein Vorsprung 19', und am Sensor 20 (oder einer stationär dazu angeordneten Komponente) eine Vertiefung 21' angeordnet, zwischen denen der formschlüssige Eingriff die vorbestimmte Drehstellung des Tiegels 10 bezüglich des Sensors 20 gewährleistet.

Sämtliche mit Bezug auf die Vertiefung 19 und den Vorsprung 21 von Fig. 11 beschriebenen Ausgestaltungen (insbesondere konkrete Anordnungsstellen) können in analoger Weise für die Ausgestaltung bzw. Anordnung des Vorsprungs 19' bzw. der Vertiefung 21' im Beispiel von Fig. 12 eingesetzt werden.

Bei den Beispielen der Fig. 11 und 12 besitzen die Vertiefung (19 bzw. 21') und der korrespondierend formgestaltete Vorsprung (21 bzw. 19') in einer Ebene orthogonal zur Richtung des Eingriffs betrachtet eine langgestreckte Querschnittsfläche. In diesem Fall kann die Vertiefung also insbesondere eine geradlinig verlaufende Nut bilden, in die eine passend bemessene geradlinig verlaufende Rippe eingreift.

Ein geradliniger Verlauf der vorgenannten langgestreckten Querschnittsfläche der Vertiefung (19 bzw. 21') und korrespondierend hierzu des Vorsprungs (21 bzw. 19') ist bevorzugt in Vertikalrichtung der Messanordnung orientiert.

Ferner ist es bevorzugt, wie in den Beispielen der Fig 11 und 12 auch ersichtlich, wenn die Vertiefung (19 bzw. 21') und korrespondierend hierzu der Vorsprung (21 bzw. 19') einen abgerundeten Vertiefungsboden bzw. ein abgerundetes Vorsprungsende aufweisen. Alternativ oder zusätzlich kann z. B. vorgesehen sein, dass ein Querschnitt der Vertiefung und korrespondierend hierzu ein Querschnitt des Vorsprungs sich in Eingriffsrichtung betrachtet verkleinern (wie in den Beispielen der Fig 11 und 12 ersichtlich).

Abweichend von dem Beispiel gemäß der Fig. 11 und 12 könnten die Vertiefung 19 bzw. 21' und korrespondierend hierzu der Vorsprung 21 bzw. 19' z. B. jeweils auch eine nichtlanggestreckte Querschnittsfläche besitzen, z. B. eine wenigstens annähernd kreisrunde Querschnittsfläche. Insbesondere könnten hierfür die Vertiefung und der Vorsprung z. B. jeweils wenigstens annähernd kegelstumpfförmig oder annähernd halbkugelförmig formgestaltet sein.

Alternativ oder zusätzlich zu der im Beispiel gemäß der Fig. 11 und Fig. 12 erläuterten Ausgestaltung mit einem formschlüssigen Eingriff eines Vorsprungs in eine Vertiefung könnte die vorbestimmte Drehstellung des Tiegels 10 bezüglich des Sensors 20 auch dadurch realisiert sein, dass der Tiegel 10 im Bereich seiner Außenseite eine (für einen Benutzer sichtbare) "Markierung" aufweist, um dem Benutzer ein Anordnen des Tiegels 10 auf dem Sensor 20 in der vorbestimmten Drehstellung des Tiegels 10 anhand der Markierung zu ermöglichen.

Eine derartige Markierung kann insbesondere z. B. als ein Markierungsvorsprung oder als eine Markierungsvertiefung ausgebildet sein. Insofern wären für eine derartige vereinfachte Ausführungsform eines Verdrehschutzes auch die in den Fig. 11 und 12 gezeigten Tiegel 10 geeignet ausgebildet. Bei diesen Tiegeln 10 können die Vertiefung 19 bzw. der Vorsprung 19' (auch ohne Vorhandensein eines entsprechenden Vorsprungs 21 bzw. einer Vertiefung 21') derartige sichtbare Markierungen darstellen.

Die vorstehend mit Bezug auf die Fig. 11 und 12 erläuterten erfindungsgemäßen Ausgestaltungen des Verdrehschutzes können bei jedem der weiter oben bereits beschriebenen Ausführungsbeispiele von Messanordnungen (Fig. 1 bis 10) eingesetzt werden.

## Patentansprüche

1. Messanordnung für eine thermische Analyse einer Probe, aufweisend
- einen Tiegel (10) zur Lagerung einer Probe (P) in dem Tiegel (10),
- einen Sensor (20) zur Messung einer Probentemperatur der Probe (P) bei auf dem Sensor (20) angeordnetem Tiegel (10),
**gekennzeichnet durch** einen Verdrehschutz für den Tiegel (10), wobei der Verdrehschutz einen Vorsprung (21; 19') und eine Vertiefung (19; 21') umfasst, um bei auf dem Sensor (20) angeordnetem Tiegel (10) eine vorbestimmte Drehstellung des Tiegels (10) bezüglich des Sensors (20) durch einen formschlüssigen Eingriff des Vorsprunges (21; 19') in die Vertiefung (19; 21') zu gewährleisten, wobei der Vorsprung (21; 19') am Sensor (20) oder einer stationär zum Sensor (20) angeordneten weiteren Komponente der Messanordnung und die Vertiefung (19; 21') im Bereich der Außenseite des Tiegels (10), oder umgekehrt, angeordnet sind.

2. Messanordnung nach Anspruch 1, wobei der Tiegel (10) im Bereich seiner Außenseite eine für einen Benutzer sichtbare Markierung (19; 19') aufweist und auch im Bereich des Sensors (20) oder an einer stationär zum Sensor (20) angeordneten Komponente der Messanordnung eine sichtbare Markierung (21; 21') vorgesehen ist, um dem Benutzer ein Anordnen des Tiegels (10) auf dem Sensor (20) in der vorbestimmten Drehstellung des Tiegels (10) bezüglich des Sensors (20) anhand der Markierungen (19; 19'; 21; 21') zu ermöglichen.

3. Messanordnung nach Anspruch 2, wobei die Markierung (19; 19') im Bereich der Außenseite des Tiegels (10) als ein Markierungsvorsprung (19') oder als eine Markierungsvertiefung (19) ausgebildet ist, wobei der Markierungsvorsprung (19') bzw. die Markierungsvertiefung (19) bevorzugt eine in Vertikalrichtung des Tiegels (10) langgestreckte Formgestaltung besitzt und/oder eine in einer Umfangsrichtung des Tiegels (10) betrachtete Breite im Bereich von 0,1 mm bis 1,0 mm besitzt.

4. Messanordnung nach einem der Ansprüche 1 bis 3, wobei die im Bereich der Außenseite des Tiegels (10) angeordnete Vertiefung (19) bzw. der im Bereich der Außenseite des Tiegels (10) angeordnete Vorsprung (19') direkt an der Außenseite eines Mantels des Tiegels (10) angeordnet ist.

5. Messanordnung nach einem der Ansprüche 1 bis 3, ferner aufweisend eine den Tiegel (10) zumindest im Bereich eines Mantels des Tiegels (10) umgebende Komponente, insbesondere einen den Tiegel (10) lagernden Außentiegel (30-1), wobei die im Bereich der Außenseite des Tiegels (10) angeordnete Vertiefung (19) bzw. der im Bereich der Außenseite des Tiegels (10) angeordnete Vorsprung (19') an der Außenseite dieser den Tiegel (10) umgebenden Komponente, insbesondere Außentiegel (30-1), angeordnet ist.

6. Messanordnung nach einem der Ansprüche 1 bis 5, wobei die Vertiefung (19; 21') und/oder der Vorsprung (21; 19') in einer Ebene orthogonal zur Richtung des Eingriffs betrachtet eine runde Querschnittsfläche besitzt.

7. Messanordnung nach einem der Ansprüche 1 bis 5, wobei die Vertiefung (19; 21') und/oder der Vorsprung (21; 19') in einer Ebene orthogonal zur Richtung des Eingriffs betrachtet eine langgestreckte Querschnittsfläche besitzt.

8. Messanordnung nach einem der Ansprüche 1 bis 7, wobei eine Oberseite des Sensors (20) einen nach oben vorstehenden Sensorrand (22) aufweist, und wobei der Vorsprung (21) am Sensor (20) bzw. die Vertiefung (21') am Sensor (20) im Bereich dieses Sensorrands (22) angeordnet ist.

9. Verfahren zur thermischen Analyse einer Probe, umfassend
- Temperieren einer in einer Probenkammer angeordneten Probe (P) gemäß eines Temperaturprogramms, in dessen Verlauf eine Kammertemperatur im Inneren der Probenkammer verändert wird,
- Messen einer Probentemperatur der Probe (P) im Verlauf des Temperaturprogramms,
**dadurch gekennzeichnet, dass** in der Probenkammer eine Messanordnung nach einem der Ansprüche 1 bis 8 zum Anordnen der Probe (P) und zum Messen der Probentemperatur eingesetzt wird.

10. Verfahren nach Anspruch 9, wobei die Kammertemperatur im Verlauf des Temperaturprogramms einen Maximalwert von mindestens 500°C besitzt

## Claims

1. A measuring assembly for a thermal analysis of a sample, having
- a crucible (10) for storing a sample (P) in the crucible (10),
- a sensor (20) for measuring a sample temperature of the sample (P) when the crucible (10) is arranged on the sensor (20),
**characterized by** an anti-rotation protection for the crucible (10), wherein the anti-rotation protection comprises a protrusion (21; 19') and a depression (19; 21'), in order to provide a predetermined rotational position of the crucible (10) with respect to the sensor (20) by means of a positive engagement of the protrusion (21; 19') with the depression (19; 21') when the crucible (10) is arranged on the sensor (20), wherein the protrusion (21; 19') is arranged on the sensor (20) or a further component of the measuring assembly, which is arranged in a stationary manner to the sensor (20), and the depression (19; 21') is arranged in the region of the outer side of the crucible (10), or vice versa.

2. The measuring assembly according to claim 1, wherein the crucible (10) has a marking (19; 19'), which is visible for a user, in the region of its outer side, and a visible marking (21; 21') is also provided in the region of the sensor (20) or on a component of the measuring assembly, which is arranged in a stationary manner to the sensor (20), in order to make it possible for the user to arrange the crucible (10) on the sensor (20) in the predetermined rotational position of the crucible (10) with respect to the sensor (20) by means of the markings (19; 19'; 21; 21').

3. The measuring assembly according to claim 2, wherein the marking (19; 19') is formed as a marking protrusion (19') or as a marking depression (19) in the region of the outer side of the crucible (10), wherein the marking protrusion (19') or the marking depression (19), respectively, preferably has a design, which is elongated in the vertical direction of the crucible (10) and/or has a width in the range of 0.1 mm to 1.0 mm, viewed in a circumferential direction of the crucible (10).

4. The measuring assembly according to one of claims 1 to 3, wherein the depression (19) arranged in the region of the outer side of the crucible (10) or the protrusion (19') arranged in the region of the outer side of the crucible (10), respectively, is arranged directly on the outer side of a jacket of the crucible (10).

5. The measuring assembly according to one of claims 1 to 3, further having a component, which surrounds the crucible (10) at least in the region of a jacket of the crucible (10), in particular an outer crucible (30-1) storing the crucible (10), wherein the depression (19) arranged in the region of the outer side of the crucible (10) or the protrusion (19') arranged in the region of the outer side of the crucible (10), respectively, is arranged on the outer side of this component, which surrounds the crucible (10), in particular outer crucible (30-1).

6. The measuring assembly according to one of claims 1 to 5, wherein the depression (19; 21') and/or the protrusion (21; 19') has a round cross sectional surface, viewed in a plane orthogonally to the direction of the engagement.

7. The measuring assembly according to one of claims 1 to 5, wherein the depression (19; 21') and/or the protrusion (21; 19') has an elongated cross sectional surface, viewed in a plane orthogonally to the direction of the engagement.

8. The measuring assembly according to one of claims 1 to 7, wherein a top side of the sensor (20) has a sensor edge (22) protruding upwards, and wherein the protrusion (21) is arranged on the sensor (20) or the depression (21') is arranged on the sensor (20), respectively, in the region of this sensor edge (22).

9. A method for the thermal analysis of a sample, comprising
- controlling the temperature of a sample (P) arranged in a sample chamber according to a temperature program, in the course of which a chamber temperature in the interior of the sample chamber is changed,
- measuring a sample temperature of the sample (P) in the course of the temperature program,
**characterized in that** a measuring assembly according to one of claims 1 to 8 for arranging the sample (P) and for measuring the sample temperature is used in the sample chamber.

10. The method according to claim 9, wherein the chamber temperature has a maximum value of at least 500°C in the course of the temperature program.

## Revendications

1. Dispositif de mesure, destiné à une analyse thermique d'un échantillon, comportant
- un creuset (10), destiné à loger un échantillon (P) dans le creuset (10),
- un capteur (20), destiné à mesurer une température d'échantillon de l'échantillon (P), lorsque le creuset (10) est placé sur le capteur (20),
**caractérisé par** une protection antitorsion pour le creuset (10), la protection antitorsion comprenant une saillie (21 ; 19') et un creux (19 ; 21'), pour assurer lorsque le creuset (10) est placé sur le capteur (20) une position en rotation prédéfinie du creuset (10) par rapport au capteur (20) par un engagement par complémentarité de forme de la saillie (21 ; 19') dans le creux (19 ; 21'), la saillie (21 ; 19') étant placée sur le capteur (20) ou sur un autre composant du dispositif de mesure, placé de manière stationnaire par rapport au capteur (20) et le creux (19 ; 21') étant placé dans la zone de la face extérieure du creuset (10), ou inversement.

2. Dispositif de mesure selon la revendication 1, dans la zone de sa face extérieure, le creuset (10) comportant un marquage (19 ; 19') visible par l'utilisateur et également dans la zone du capteur (20) ou sur un composant du dispositif de mesure, placé de manière stationnaire par rapport au capteur (20) étant prévu un marquage (21; 21') visible, pour permettre à l'utilisateur de placer le creuset (10) sur le capteur (20) dans la position en rotation prévue du creuset (10) par rapport au capteur (20), à l'aide des marquages (19 ; 19' ; 21 ; 21').

3. Dispositif de mesure selon la revendication 2, dans la zone de la face extérieure du creuset (10), le marquage (19 ; 19') étant conçu sous la forme d'une saillie de marquage (19') ou sous la forme d'un creux de marquage (19), la saillie de marquage (19') ou le creux de marquage (19) présentant de préférence une configuration allongée dans la direction verticale du creuset (10) et/ou une largeur considérée dans la direction périphérique du creuset (10) se situant dans l'ordre de 0,1 mm à 1,0 mm.

4. Dispositif de mesure selon l'une quelconque des revendications 1 à 3, le creux (19) placé dans la zone de la face extérieure du creuset (10) ou la saillie (19') placée dans la zone de la face extérieure du creuset (10) étant placé(e) directement sur la face extérieure d'une enveloppe du creuset (10).

5. Dispositif de mesure selon l'une quelconque des revendications 1 à 3, comportant par ailleurs un composant entourant le creuset (10) au moins dans la zone d'une enveloppe du creuset (10), notamment d'un creuset extérieur (30-1) logeant le creuset (10), le creux (19) placé dans la zone de la face extérieure du creuset (10) ou la saillie (19') placée dans la zone de la face extérieure du creuset (10) étant placé(e) sur la face extérieure dudit composant entourant le creuset (10), notamment du creuset extérieur (30-1).

6. Dispositif de mesure selon l'une quelconque des revendications 1 à 5, considéré(e) dans un plan orthogonal par rapport à la direction d'engagement, le creux (19 ; 21') et/ou la saillie (21 ; 19') présentant une surface de section transversale ronde.

7. Dispositif de mesure selon l'une quelconque des revendications 1 à 5, dans un plan orthogonal par rapport à la direction d'engagement, le creux (19 ; 21') et/ou la saillie (21 ; 19') présentant une surface de section transversale allongée.

8. Dispositif de mesure selon l'une quelconque des revendications 1 à 7, une face supérieure du capteur (20) comportant un bord de capteur (22) débordant vers le haut, et la saillie (21) étant placée sur le capteur (20) ou le creux (21') étant placé sur le capteur (20), dans la zone dudit bord de capteur (22).

9. Procédé, destiné à l'analyse thermique d'un échantillon, comprenant les étapes consistant à
- procéder à la mise en température d'un échantillon (P) placé dans une chambre d'échantillon, au cours de laquelle une température de la chambre à l'intérieur de la chambre d'échantillon est modifiée,
- mesurer une température d'échantillon de l'échantillon (P) au cours du programme de température,
**caractérisé en ce que** dans la chambre d'échantillon est mis en œuvre d'un dispositif de mesure selon l'une quelconque des revendications 1 à 8, destiné à placer l'échantillon (P) et à mesurer la température d'échantillon.

10. Procédé selon la revendication 9, au cours du programme de température, la température de la chambre présentant une valeur maximum d'au moins 500°C.
